(19) Europäisches Patentamt
European Patent Office
Office européen des brevets

(11) EP 4 575 053 A2

(12) **EUROPEAN PATENT APPLICATION**

(43) Date of publication:
**25.06.2025 Bulletin 2025/26**

(21) Application number: **24214673.6**

(22) Date of filing: **22.11.2024**

(51) International Patent Classification (IPC):
***D01F 6/84*** *(2006.01)* ***D04H 3/011*** *(2012.01)*

(52) Cooperative Patent Classification (CPC):
(C-Sets available)
**C08K 3/22; C08K 5/0083; C08L 67/02; D01F 6/84; D04H 3/011** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023 KR 20230172788**
**27.12.2023 KR 20230193597**

(71) Applicant: **SK leaveo Co., Ltd.**
**Gyeonggi-do 16338 (KR)**

(72) Inventors:
- **LEE, Hyeri**
  **16338 Suwon-si, Gyeonggi-do (KR)**
- **KIM, Kyung Youn**
  **16338 Suwon-si, Gyeonggi-do (KR)**
- **KIM, Seong Dong**
  **16338 Suwon-si, Gyeonggi-do (KR)**
- **YOU, Kyoung Hwan**
  **16338 Suwon-si, Gyeonggi-do (KR)**
- **KIM, Hoon**
  **16338 Suwon-si, Gyeonggi-do (KR)**
- **BYEON, Jun Su**
  **16338 Suwon-si, Gyeonggi-do (KR)**
- **LEE, Moon Hyun**
  **16338 Suwon-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

(54) **BIODEGRADABLE RESIN COMPOSITION AND BIODEGRADABLE MOLDED ARTICLE INCLUDING THE SAME**

(57) The present invention provides a biodegradable resin composition and a biodegradable molded article including the same, wherein the biodegradable resin composition includes: a first biodegradable resin including a first repeating unit derived from a diol, a second repeating unit derived from aromatic dicarboxylic acid, and a third repeating unit derived from aliphatic dicarboxylic acid; and a crystallization accelerator, wherein the crystallization accelerator is included in a content of 100 ppm to 50,000 ppm, and an isothermal crystallization time at 90 °C according to Measurement Method 1 (see the detailed description) is 10 seconds to 900 seconds.

【FIG. 1】

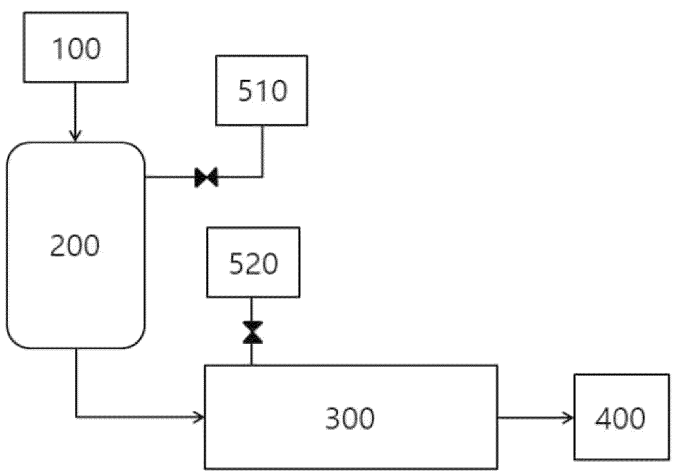




EP 4 575 053 A2

(52) Cooperative Patent Classification (CPC): (Cont.)

C-Sets
**C08K 3/22, C08L 67/02;**
**C08K 5/0083, C08L 67/02;**
**C08L 67/02, C08L 1/02;**
**C08L 67/02, C08L 67/02;**
**C08L 67/02, C08L 67/04**

## Description

[Technical Field]

The present invention relates to a biodegradable resin composition and a biodegradable molded article including the same.

[Background Art]

Polyethylene, polypropylene, and polyethylene terephthalate have been used as materials for clothing fibers, nonwoven fabrics, etc. As concerns about environmental issues have increased in recent years, solutions are needed to address the discard issue of short-lived clothing fibers and disposable nonwoven fabrics.

As a solution to these issues, research on biodegradable resins is actively being conducted. Polylactic acid (PLA), polybutylene adipate terephthalate (PBAT), and polybutylene succinate (PBS) are being introduced as biodegradable resins.

However, a biodegradable resin has poor spinning ability compared to other materials, so it has limitations in manufacturing fibers or nonwoven fabrics.

In addition, to improve the spinning ability of a biodegradable resin, various biodegradable resins were combined, but the miscibility between biodegradable resins with different properties was reduced, resulting in problems such as fiber-to-fiber fusion or fiber breakage after spinning.

[Disclosure]

[Technical Problem]

Therefore, the present invention has been made in view of the above problems, and it is one object of the present invention to provide a biodegradable resin composition having excellent biodegradability, improved spinning ability, injection moldability and foamability, and excellent mechanical properties, and a biodegradable molded article including the biodegradable resin composition.

It is another object of the present invention to provide a biodegradable resin composition having soft texture and excellent elasticity and being eco-friendly, and a biodegradable nonwoven fabric including the biodegradable resin composition.

[Technical Solution]

In accordance with an aspect of the present invention, the above and other objects can be accomplished by the provision of a biodegradable resin composition, including: a first biodegradable resin including a first repeating unit derived from a diol, a second repeating unit derived from aromatic dicarboxylic acid, and a third repeating unit derived from aliphatic dicarboxylic acid; and a crystallization accelerator, wherein the crystallization accelerator is included in a content of 100 ppm to 50,000 ppm, and an isothermal crystallization time at 90 °C according to Measurement Method 1 below is 10 seconds to 900 seconds:

[Measurement Method 1]

1) The biodegradable resin composition is heated up to 220 °C at a heating rate of 10 °C/min, and then maintained for 5 minutes.
2) Next, the biodegradable resin composition is cooled up to 90 °C at a cooling rate of 100 °C/min, and an isothermal state is maintained for 100 minutes.
3) Using differential scanning calorimetry, a time at which a total area of a crystallization peak of the biodegradable resin composition becomes half is measured.

In an embodiment of the present invention, the biodegradable resin composition may further include at least one second biodegradable resin selected from the group consisting of polybutylene succinate, polylactic acid, polybutylene adipate, polybutylene succinate-adipate, polybutylene succinate-terephthalate, polyhydroxybutyrate-valerate, polycaprolactone, polybutylene adipate-co-butylene succinate terephthalate and polybutylene succinate adipate terephthalate.

In an embodiment of the present invention, the crystallization accelerator may include at least one of an organic

nucleating agent and an inorganic nucleating agent.

In an embodiment of the present invention, the biodegradable resin composition may include the organic nucleating agent in a content of 10 ppm to 5,000 ppm.

In an embodiment of the present invention, the biodegradable resin composition may include the inorganic nucleating agent in a content of 100 ppm to 10,000 ppm.

In an embodiment of the present invention, the inorganic nucleating agent may include at least one of rutile-phase titanium dioxide and anatase-phase titanium dioxide.

In an embodiment of the present invention, the inorganic nucleating agent may have an average diameter ($D_{50}$) of 0.1 $\mu$m to 0.5 $\mu$m.

In an embodiment of the present invention, the biodegradable resin composition may further include an external lubricant.

In an embodiment of the present invention, the biodegradable resin composition may include the external lubricant in a content of 100 ppm to 5,000 ppm.

In an embodiment of the present invention, the biodegradable resin composition may have a crystallization temperature (Tc) of 35 °C to 90 °C, as measured using differential scanning calorimetry.

In an embodiment of the present invention, the biodegradable resin composition may have a melt flow rate of 2 g/10 min to 60 g/10 min, as measured under conditions of 190 °C and 2.16 kg.

In an embodiment of the present invention, the biodegradable resin composition may have a tensile strength of 25 MPa or more according to Measurement Method 2 below:

[Measurement Method 2]

1) The biodegradable resin composition is manufactured into a specimen with a thickness of 300 $\mu$m.

2) For the specimen, tensile strength is measured at a rate of 100 mm/min using a universal testing machine.

In an embodiment of the present invention, a breaking elongation of the specimen measured using the universal testing machine may be 800 % to 1,200 %.

In an embodiment of the present invention, the isothermal crystallization time may be 40 seconds to 800 seconds.

In accordance with another aspect of the present invention, there is provided a biodegradable molded article including a biodegradable resin composition that includes a first biodegradable resin including a first repeating unit derived from a diol, a second repeating unit derived from aromatic dicarboxylic acid, and a third repeating unit derived from aliphatic dicarboxylic acid, and a crystallization accelerator, wherein the crystallization accelerator is included in a content of 100 ppm to 50,000 ppm based on the total weight of the biodegradable resin composition, and an isothermal crystallization time at 90 °C according to Measurement Method 3 below is 10 seconds to 900 seconds:

[Measurement Method 1]

1) The biodegradable resin composition is heated up to 220 °C at a heating rate of 10 °C/min, and then maintained for 5 minutes.
2) Next, the biodegradable resin composition is cooled up to 90 °C at a cooling rate of 100 °C/min, and an isothermal state is maintained for 100 minutes.
3) Using differential scanning calorimetry, a time at which the total area of the crystallization peak of the biodegradable resin composition becomes half is measured.

In an embodiment of the present invention, the biodegradable molded article may be a nonwoven fabric, an injection-molded article, or a foam-molded article.

In accordance with another aspect of the present invention, there is provided a biodegradable nonwoven fabric, including: a biodegradable resin composition that includes a first biodegradable resin including a diol, aromatic dicarboxylic acid and aliphatic dicarboxylic acid, wherein the biodegradable resin composition has a first irreversible strain rate of less than 30 % measured by Measurement Method 3 below:

[Measurement Method 3]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, the test part is pulled by 40 % more than a total length thereof.
4) The test part is recovered for 5 minutes at room temperature in a state where there is no external force.
5) The first irreversible strain rate is derived from Equation 1 below:

First irreversible strain rate = (Length of the test section after the recovery - 25 mm) / 25 mm. [Equation 1]

In an embodiment of the present invention, the biodegradable resin composition may have a second irreversible strain rate of less than 20 % measured by Measurement Method 4 below:

[Measurement Method 4]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, the test part is pulled by 30 % more than a total length thereof.
4) The test part is recovered for 5 minutes at room temperature in a state where there is no external force.
5) The second irreversible strain rate is derived by Equation 2 below:

Second irreversible strain rate = (Length of the test section after the recovery - 25 mm) / 25 mm. [Equation 2]

In an embodiment of the present invention, the biodegradable resin composition may have a third irreversible strain rate of less than 10 % measured by Measurement Method 5 below:

[Measurement Method 5]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, it is pulled by 20 % more than a total length of the test part.
4) The test part is recovered for 5 minutes at room temperature in a state where there is no external force.
5) The third irreversible strain rate is derived by Equation 3 below:

Third irreversible strain rate = (Length of the test section after the recovery - 25 mm) / 25 mm. [Equation 3]

In an embodiment of the present invention, the biodegradable resin composition may have a fourth irreversible strain rate of less than 5 % measured by Measurement Method 6 below:

[Measurement Method 6]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, it is pulled by 10 % more than a total length of the test part.
4) The test part is recovered for 5 minutes at room temperature in a state where there is no external force.
5) The fourth irreversible strain rate is derived by Equation 4 below:

Fourth irreversible strain rate = (Length of the test section after the recovery - 25 mm) / 25 mm. [Equation 4]

In an embodiment of the present invention, the biodegradable resin composition may further include a second biodegradable resin, wherein the second biodegradable resin includes one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate.

The biodegradable nonwoven fabric according to the present invention includes a biodegradable resin composition, including: a first biodegradable resin including a diol, aromatic dicarboxylic acid and aliphatic dicarboxylic acid, wherein, in the biodegradable resin composition, a temperature of maximum loss tangent by dynamic mechanical analysis is -40 °C to 0 °C, and a minimum temperature in a rubbery flat region is lower than 30 °C, wherein the rubbery flat region is higher than the temperature of the maximum loss tangent, and a loss tangent change rate is in a temperature of less than 0.025/10 °C.

The biodegradable resin composition according to the present invention includes a first biodegradable resin including a diol, aromatic dicarboxylic acid and aliphatic dicarboxylic acid, and has a first irreversible strain rate of less than 30 %, as measured by Measurement Method 3 below:

[Measurement Method 3]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, the test part is pulled by 40 % more than the total length thereof.
4) The test part is recovered for 5 minutes at room temperature in a state where there is no external force.
5) The first irreversible strain rate is derived from Equation 1 below:

First irreversible strain rate = (Length of the test section after the recovery - 25 mm) / 25 mm [Equation 1]

The biodegradable resin composition according to the present invention includes a first biodegradable resin including a diol, aromatic dicarboxylic acid and aliphatic dicarboxylic acid, and has a temperature of maximum loss tangent of -40 °C to 0 °C by dynamic mechanical analysis. Here, the minimum temperature of the rubbery flat region is lower than 30 °C, the rubbery flat region is higher than the maximum loss tangent, and the loss tangent change rate is in a temperature of less than 0.025/10 °C.

The biodegradable nonwoven fabric according to the present invention includes the biodegradable resin composition that includes the first biodegradable resin including a diol, aromatic dicarboxylic acid and aliphatic dicarboxylic acid, and has a temperature of maximum loss tangent of -40 °C to 0 °C as measured by Measurement Method 7 below. In the biodegradable nonwoven fabric, the minimum temperature of a rubbery flat region is lower than 30 °C.

[Measurement Method 7]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 5 mm and a length of 12 mm.
3) The test part is subjected to the measurement of loss tangent dependent upon temperature while heating from -40 °C to 80 °C by dynamic mechanical analysis.
4) The temperature having the maximum value of the loss tangent is derived as the temperature of maximum loss tangent.
5) A temperature range where the loss tangent change rate is in a temperature of less than 0.025/10 °C is derived as a rubbery flat region.

[Advantageous effects]

A biodegradable resin composition according to the present invention can have an isothermal crystallization time that allows it to be manufactured into a nonwoven fabric by a spinning process by selecting the type of a biodegradable resin and adjusting the content of a crystallization accelerator. Accordingly, the biodegradable resin composition has excellent spinning ability, so that the phenomenon of fiber breakage in the spinning process can be suppressed. In addition, the biodegradable resin composition has excellent injection moldability, so that, in an injection process, the release property is excellent, and the shape of an injection-molded article can be maintained. In addition, the biodegradable resin composition has excellent foamability, so that, when manufacturing a molded article, a foaming ratio can be increased, and the uniform size of foamed cells and the uniform thickness of a molded article can be realized. In addition, a biodegradable molded article manufactured from the biodegradable resin composition has excellent mechanical properties and is naturally biodegradable, so that it does not require incineration or emit harmful substances.

As the biodegradable resin composition according to the present invention and a biodegradable nonwoven fabric including the same includes a biodegradable resin, so that, when the life of the biodegradable nonwoven fabric ends, it can be naturally biodegraded, so that it does not require incineration or emit harmful substances. Since the biodegradable resin composition according to the present invention can be manufactured into ultrafine fiber, a biodegradable nonwoven fabric containing the ultrafine fiber can have soft texture. In addition, since the biodegradable nonwoven fabric has an irreversible strain rate in or below a certain range and has a rubber flat region in a temperature range in which a nonwoven fabric is generally, it can have excellent elasticity.

[Description of Drawings]

FIG. 1 schematically illustrates an apparatus for preparing a biodegradable resin composition according to an embodiment.
FIG. 2 schematically illustrates a process of manufacturing a biodegradable resin composition sheet according to an embodiment.
FIG. 3 schematically illustrates a method of measuring the irreversible strain rate of a test part according to an embodiment.

[Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless

otherwise specified. In addition, in the present specification or the present application, 'ppm' is based on the weight. In addition, in the present specification or the present application, "A and/or B" means "A, B, or, A and B."

A biodegradable resin composition according to the present invention includes a first biodegradable resin including a first repeating unit derived from a diol, a second repeating unit derived from aromatic dicarboxylic acid, and a third repeating unit derived from aliphatic dicarboxylic acid.

The diol may be an aliphatic diol. The diol may be a bio-derived diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol and derivatives thereof.

The diol may be at least one selected from the group consisting of 1,4-butanediol, 1,2-ethanediol, 1,3-propanediol, diethylene glycol, neopentyl glycol or derivatives thereof.

The diol may be at least one selected from the group consisting of 1,4-butanediol, 1,2-ethanediol, 1,3-propanediol and derivatives thereof.

The diol may include 1,4-butanediol or derivatives thereof.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyletherdicarboxylic acid, anthracenedicarboxylic acid, phenanthrenedicarboxylic acid and derivatives thereof.

The aromatic dicarboxylic acid may be at least one selected from the group consisting of terephthalic acid, dimethyl terephthalate, 2,6-naphthalene dicarboxylic acid, isophthalic acid and derivatives thereof.

The aromatic dicarboxylic acid may include terephthalic acid, dimethyl terephthalate or a derivative thereof.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid and 1,4-cyclohexanedicarboxylic acid and derivatives thereof.

The aliphatic dicarboxylic acid may be at least one selected from the group consisting of adipic acid, succinic acid and sebacic acid and derivatives thereof.

The aliphatic dicarboxylic acid may include adipic acid or derivatives thereof.

The molar ratio of the first repeating unit:the second repeating unit and the third repeating unit may be 1:0.9 to 1:1.1. The molar ratio of the first repeating unit:the second repeating unit and the third repeating unit may be 1:0.95 to 1:1.05. The molar ratio of the first repeating unit:the second repeating unit and the third repeating unit may be 1:0.98 to 1:1.03.

The molar ratio of the second repeating unit:the third repeating unit may be 3:7 to 7:3. The molar ratio of the second repeating unit:the third repeating unit may be 3.3:6.7 to 6.7:3.3. The molar ratio of the second repeating unit:the third repeating unit may be 4:6 to 6:4. The molar ratio of the second repeating unit:the third repeating unit may be 4.2:5.8 to 5:5.

When the range is satisfied, the spinning ability of the biodegradable resin composition may be improved.

The first biodegradable resin may include the first repeating unit derived from 1,4-butanediol in a content of about 90 mol% or more based on the total diol. The first biodegradable resin may include the first repeating unit derived from 1,4-butanediol in a content of about 95 mol% or more based on the total diol. The first biodegradable resin may include the first repeating unit derived from 1,4-butanediol in a content of about 98 mol% or more based on the total diol.

The first biodegradable resin may include the second repeating unit derived from terephthalic acid or dimethyl terephthalate in a content of about 30 mol% to about 70 mol% based on the total dicarboxylic acid. The first biodegradable resin may include the second repeating unit derived from terephthalic acid or dimethyl terephthalate in a content of about 35 mol% to about 65 mol% based on the total dicarboxylic acid. The first biodegradable resin may include the second repeating unit derived from terephthalic acid or dimethyl terephthalate in a content of about 40 mol% to about 60 mol% based on the total dicarboxylic acid. The first biodegradable resin may include the second repeating unit derived from terephthalic acid or dimethyl terephthalate in a content of about 43 mol% to about 53 mol% based on the total dicarboxylic acid.

The first biodegradable resin may include the third repeating unit derived from adipic acid in a content of about 30 mol% to about 70 mol% based on the total dicarboxylic acid. The first biodegradable resin may include the third repeating unit derived from adipic acid in a content of about 35 mol% to about 65 mol% based on the total dicarboxylic acid. The first biodegradable resin may include the third repeating unit derived from adipic acid in a content of about 40 mol% to about 60 mol% based on the total dicarboxylic acid. The first biodegradable resin may include the third repeating unit derived from adipic acid in a content of about 47 mol% to about 57 mol% based on the total dicarboxylic acid.

The biodegradable resin composition may further include at least one second biodegradable resin selected from the group consisting of polybutylene succinate, polylactic acid, polybutylene adipate, polybutylene succinate-adipate,

polybutylene succinate-terephthalate, polyhydroxybutyrate-valerate, polycaprolactone, polybutylene adipate-co-butylene succinate terephthalate and polybutylene succinate adipate terephthalate.

The weight ratio of the first biodegradable resin:the second biodegradable resin may be 1:99 to 30:70, 2:98 to 30:70, 3:97 to 30:70, 4:96 to 30:70, or 5:95 to 30:70. When the range is satisfied, the biodegradable resin composition may have excellent spinning ability during a spinning process, and a produced biodegradable nonwoven fabric may have improved tensile strength and elongation.

Preferably, the second biodegradable resin may include polylactic acid.

The polylactic acid may be a high-melting-point polylactic acid having stereo-complex crystals. In addition, the polylactic acid may be formed by solution-mixing or melt-mixing poly L-lactic acid with poly D-lactic acid.

The polylactic acid may include a unit represented by Formula 1 below:

[Formula 1]

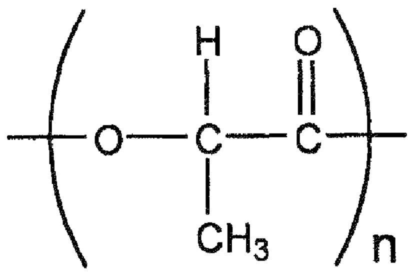

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of approximately 90 mol% to approximately 100 mol%, approximately 95 mol% to approximately 100 mol%, or approximately 97 mol% to approximately 100 mol%. The poly L-lactic acid may include the D-lactic acid unit and/or a unit other than lactic acid. The poly L-lactic acid may include the D-lactic acid unit and/or a unit other than lactic acid in an amount of approximately 0 mol% to approximately 10 mol%, approximately 0 mol% to approximately 5 mol%, or approximately 0 mol% to approximately 3 mol%.

The poly D-lactic acid may be a polymer including primarily the D-lactic acid unit. The poly D-lactic acid may include the D-lactic acid unit in an amount of approximately 90 mol% to approximately 100 mol%, approximately 95 mol% to approximately 100 mol%, or approximately 97 mol% to approximately 100 mol%. The poly D-lactic acid may include the L-lactic acid unit and/or a unit other than lactic acid. The poly D-lactic acid may include the L-lactic acid unit and/or a unit other than lactic acid in an amount of approximately 0 mol% to approximately 10 mol%, approximately 0 mol% to approximately 5 mol%, or approximately 0 mol% to approximately 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The melting temperature (Tm) of the polylactic acid may be about 100 °C to about 240 °C. The melting temperature of the polylactic acid may be about 120 °C to about 220 °C. The melting temperature of the polylactic acid may be about 140 °C to about 200 °C. The melting temperature of the polylactic acid may be about 140 °C to about 180 °C.

The crystallization temperature (Tc) of the polylactic acid may be about 50 °C to about 80 °C. The crystallization temperature of the polylactic acid may be about 55 °C to about 75 °C.

The glass transition temperature (Tg) of the polylactic acid may be about 20 °C to about 80 °C. The glass transition temperature of the polylactic acid may be about 30 °C to about 70 °C. The glass transition temperature of the polylactic acid may be about 40 °C to about 65 °C. The melting temperature and the glass transition temperature may be measured by differential scanning calorimetry (DSC) according to ASTM D-3417.

As the polylactic acid has a melting temperature and glass transition temperature in the ranges, it may be easily extruded. In addition, as the polylactic acid has a melting temperature and glass transition temperature in the ranges, a biodegradable nonwoven fabric manufactured therefrom may have improved mechanical properties.

The biodegradable resin composition according to the present invention may include a crystallization accelerator, and the crystallization accelerator may be included in a content of 100 ppm to 50,000 ppm based on the total weight of the biodegradable resin composition. The crystallization accelerator may be included in a content of 100 ppm to 50,000 ppm, 100 ppm to 40,000 ppm, 100 ppm to 30,000 ppm, 100 ppm to 10,000 ppm, or 100 ppm to 6,000 ppm based on the total weight of the biodegradable resin composition.

The crystallization accelerator may be mixed in the polymerization reaction of the first biodegradable resin and/or a compounding process with the first biodegradable resin.

In addition, when the biodegradable resin composition includes a crystallization accelerator within the content range, it may have an appropriate isothermal crystallization time so that it can be manufactured into a nonwoven fabric by a spinning process.

Accordingly, the biodegradable resin composition has excellent spinning ability, so that the phenomenon of fiber breakage in the spinning process may be suppressed.

In addition, the biodegradable resin composition has excellent injection moldability, so that, in an injection process, the release property is excellent, and the shape of an injection-molded article may be maintained.

In addition, the biodegradable resin composition has excellent foamability, so that, when manufacturing a biodegradable molded article, a foaming ratio may be increased, and the uniform size of foamed cells and the uniform thickness of a molded article may be realized.

The crystallization accelerator may include at least one of an organic nucleating agent and an inorganic nucleating agent.

The organic nucleating agent may refer to a nucleating agent composed of an organic compound.

The biodegradable resin composition may include the organic nucleating agent in a content of 10 ppm to 5,000 ppm, 10 ppm to 3,000 ppm, 10 ppm to 1,000 ppm, or 100 ppm to 500 ppm.

The organic nucleating agent may include nanocellulose having an average length of 10 nm to 300 nm, 10 nm to 200 nm, 20 nm to 200 nm, or 30 nm to 200 nm.

The content of the nanocellulose may be 10 ppm to 500 ppm, 50 ppm to 500 ppm, 50 ppm to 300 ppm, or 50 ppm to 200 ppm based on the total weight of the biodegradable resin composition. When the range is satisfied, a crystallization rate may be improved, so that fiber-to-fiber fusion may be suppressed during a spinning process, thereby enabling denier control. In addition, in an injection process, the release property is excellent, and the shape of an injection-molded article may be maintained. In addition, in a foaming process, a foaming ratio may be increased, and the uniform size of foamed cells and the uniform thickness of a molded article may be realized.

The nanocellulose may be subjected to bead mill pre-treatment or ultrasonic pre-treatment. The nanocellulose may be subjected to bead mill pre-treatment and ultrasonic pre-treatment. The nanocellulose is preferably subjected to ultrasonic pre-treatment after being subjected to bead mill pre-treatment, so that re-agglomeration may be prevented and, accordingly, dispersibility may be improved.

The bead mill pre-treatment may be performed using a vertical mill or a horizontal mill as a wet milling device. The horizontal mill is preferable in that it can fill a larger amount of beads inside a chamber, reduce the uneven wear of a machine, reduce bead wear, and make maintenance easier, but the present invention is not limited thereto.

The bead mill pre-treatment may be performed using beads made of one or more selected from the group consisting of zirconium, zircon, zirconia, quartz and aluminum oxide.

The bead mill pre-treatment may be performed using beads having a diameter of about 0.3 mm to about 1 mm. For example, the diameter of the bead may be about 0.3 mm to about 0.9 mm, about 0.4 mm to about 0.8 mm, about 0.45 mm to about 0.7 mm or about 0.45 mm to about 0.6 mm. When the range is satisfied, the nanocellulose may have improved dispersibility.

The ultrasonic pretreatment is a method of physically breaking up or pulverizing nanoparticles by waves generated by emitting ultrasonic waves of 20 kHz into a solution.

The ultrasonic pre-treatment may be performed for less than 30 minutes at an output of 30,000 J/s or less. For example, the ultrasonic pre-treatment may be performed for 25 minutes or less, 20 minutes or less or 18 minutes or less at an output of 25,000 J/s or less or 22,000 J/s or less. When the range is satisfied, the ultrasonic pre-treatment effect, i.e., dispersibility improvement, may be maximized.

The inorganic nucleating agent may refer to a nucleating agent composed of an inorganic compound.

The biodegradable resin composition may include the inorganic nucleating agent in a content of 100 ppm to 10,000 ppm, 100 ppm to 8,000 ppm, 300 ppm to 8,000 ppm, 500 ppm to 8,000 ppm, or 500 ppm to 6,000 ppm. When the range is satisfied, the phenomenon of fiber breakage during a spinning process may be suppressed, and a spinning process may be smoothly performed. In addition, in an injection process, the release property is excellent, and the shape of an injection-molded article may be maintained. In addition, in a foaming process, a foaming ratio may be increased, and the uniform size of foamed cells and the uniform thickness of a molded article may be realized.

The inorganic nucleating agent may include one or more selected from the group consisting of titanium dioxide, talc, kaolinite, montmorillonite, mica, clay, zeolite, silica, graphite, carbon black, mica, barium sulfate, calcium silicate, calcium carbonate, calcium sulfide, calcium titanate, zinc oxide, aluminum oxide, magnesium oxide, neodymium oxide, and boron nitride.

The inorganic nucleating agent may include at least one of rutile-phase titanium dioxide and anatase-phase titanium dioxide.

Preferably, the inorganic nucleating agent may include anatase-phase titanium dioxide. The anatase-phase titanium dioxide exhibits high photoactivity, so that biodegradability may be further improved.

The inorganic nucleating agent may have an average diameter ($D_{50}$) of 0.1 $\mu$m to 0.5 $\mu$m, 0.1 $\mu$m to 0.4 $\mu$m, 0.15 $\mu$m to 0.4 $\mu$m, 0.15 $\mu$m to 0.3 $\mu$m, or 0.15 $\mu$m to 0.25 $\mu$m. When the range is satisfied, kneading properties with the first biodegradable resin and the mechanical strength of the biodegradable resin composition may be improved.

The biodegradable resin composition may further include an external lubricant.

The external lubricant reduces heat generation due to friction during the mixing, melting, and processing of raw materials, has an excellent dispersing effect for the first biodegradable resin, and has an excellent lubricating effect, so that the manufacturing efficiency may be improved.

The external lubricant may be selected from the group consisting of a carbodiimide-based lubricant, an ester-based lubricant, an amide-based lubricant, a paraffin-based lubricant, and a stearate-based lubricant.

The external lubricant may include a stearate-based lubricant.

As the external lubricant, calcium stearate, and/or stearyl stearate may be used.

The biodegradable resin composition may include the external lubricant in a content of 100 ppm to 5,000 ppm, 200 ppm to 5,000 ppm, 200 ppm to 4,000 ppm, 200 ppm to 3,000 ppm, 200 ppm to 2,000 ppm, 300 ppm to 2,000 ppm, 400 ppm to 2,000 ppm, or 500 ppm to 2,000 ppm. When the range is satisfied, the manufacturing efficiency may be improved without deterioration of the mechanical properties of the biodegradable resin composition.

The biodegradable resin composition may include a branching agent including at least one of a trivalent or higher alcohol and a trivalent or higher carboxylic acid. The branching agent may react with the diol, the aliphatic dicarboxylic acid, and/or an aromatic dicarboxylic acid. The branching agent may be included as a part of the molecular structure of the first biodegradable resin.

The trivalent or higher alcohol may be at least one selected from the group consisting of glycerol, pentaerythritol and trimethylolpropane.

The trivalent or higher carboxylic acid may be at least one selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, and benzene-1,2,4,5-tetracarboxylic acid.

The branching agent may include glycerol.

The content of the branching agent may be 500 ppm to 3,000 ppm, 700 ppm to 3,000 ppm, 700 ppm to 2,500 ppm, or 1,000 ppm to 2,000 ppm based on the total weight of the biodegradable resin composition. When the range is satisfied, a nonwoven fabric manufactured from the biodegradable resin composition may have appropriate biodegradability and improved mechanical properties.

The biodegradable resin composition may include a heat stabilizer. The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

The heat stabilizer may include triethylphosphonoacetate.

The content of the heat stabilizer may be 10 ppm to 3,000 ppm, 20 ppm to 2,000 ppm, 20 ppm to 1,500 ppm or 20 ppm to 1,000 ppm based on the total weight of the biodegradable resin composition. When the range is satisfied, polymer deterioration due to high temperature during a reaction process may be controlled, so that the terminal group of the polymer may be reduced, and the color may be improved.

The biodegradable resin composition has an isothermal crystallization time of 10 seconds to 900 seconds at 90 °C according to Measurement Method 1 below:

[Measurement Method 1]

1) The biodegradable resin composition is heated up to 220 °C at a heating rate of 10 °C/min, and then maintained for 5 minutes.
2) Next, the biodegradable resin composition is cooled up to 90 °C at a cooling rate of 100 °C/min, and then an isothermal state is maintained for 100 minutes.
3) Using differential scanning calorimetry, a time at which the total area of the crystallization peak of the biodegradable resin composition becomes half is measured.

The isothermal crystallization time is to rapidly cool the biodegradable resin composition in a molten state and evaluate the time taken until crystallization.

A short isothermal crystallization time indicates that the crystallization proceeds quickly. A rapid crystallization may mean that molecular motion is suppressed and crystals are formed in a rapid stage after cooling.

The isothermal crystallization time may be adjusted depending upon the presence or absence of the above-described crystallization accelerator and the content thereof.

When the biodegradable resin composition has an isothermal crystallization time according to Measurement Method 1, this means that the biodegradable resin composition has a crystallization rate enabling production into a nonwoven fabric by a spinning process and, at the same time, the occurrence of fiber-to-fiber fusion and the phenomenon of fiber breakage in the spinning process can be suppressed.

In addition, when the biodegradable resin composition has an isothermal crystallization time according to Measurement Method 1, this means that the biodegradable resin composition has a crystallization rate enabling production into an injection-molded article by an injection-molding process and, at the same time, releasability in an injection-molding process is excellent and the shape of an injection-molded article can be maintained.

In addition, when the biodegradable resin composition has an isothermal crystallization time according to Measurement Method 1, this means that the biodegradable resin composition has a crystallization rate enabling production into a foam-molded article by a foaming process and, at the same time, a foaming ratio can be increased and the uniform size of foamed cells and the uniform thickness of a molded article can be accomplished.

In addition, when the biodegradable resin composition has an isothermal crystallization time according to Measurement Method 1, this means that the nonwoven fabric, injection-molded article, and foam-molded article manufactured from the biodegradable resin composition have improved mechanical properties.

An isothermal crystallization time at 90 °C according to Measurement Method 1 of the biodegradable resin composition may be 40 seconds to 800 seconds. Preferably, the isothermal crystallization time at 90 °C according to Measurement Method 1 of the biodegradable resin composition may be 41 seconds to 795 seconds, 40 seconds to 790 seconds, 40 seconds to 785 seconds, or 41 seconds to 784 seconds. When the range is satisfied, the biodegradable resin composition has excellent spinning ability, so that the phenomenon of fiber breakage in the spinning process may be suppressed. In addition, the biodegradable resin composition has excellent injection moldability, so that, in an injection process, the release property is excellent, and the shape of an injection-molded article may be maintained. In addition, the biodegradable resin composition has excellent foamability, so that, when manufacturing a biodegradable molded article, a foaming ratio may be increased, and the uniform size of foamed cells and the uniform thickness of a molded article may be realized. In addition, a biodegradable molded article manufactured from the biodegradable resin composition may have improved mechanical properties.

When the biodegradable resin composition is cooled up to 70 °C, not 90 °C, according to Measurement Method 1, the isothermal crystallization time may be 240 seconds or less, 200 seconds or less, 180 seconds or less, or 130 seconds or less.

When the biodegradable resin composition is cooled up to 50 °C, not 90 °C, according to Measurement Method 1, the isothermal crystallization time may be 120 seconds or less, 100 seconds or less, 80 seconds or less, or 60 seconds or less.

When the range is satisfied, a nonwoven fabric, an injection-molded article, and a foam-molded article may be manufactured from the biodegradable resin composition, and the mechanical properties may be improved.

The biodegradable resin composition may have a crystallization temperature (Tc) of 35 °C to 90 °C, 40 °C to 90 °C, 45 °C to 90 °C, 45 °C to 85 °C, or 50 °C to 83 °C, as measured using differential scanning calorimetry.

The biodegradable resin composition may have a melting temperature (Tm). The melting temperature may be measured by the differential scanning calorimetry. The biodegradable resin composition may have a melting temperature of 100 °C to 180 °C, 100 °C to 150 °C, 110 °C to 130 °C, or 119 °C to 124 °C.

The biodegradable resin composition may have a glass transition temperature (Tg). The glass transition temperature may be measured by the differential scanning calorimetry. The biodegradable resin composition may have

a glass transition temperature of -50 °C to 0 °C, -40 °C to 0 °C, -40 °C to -20 °C, or -33 °C to -28 °C.

The biodegradable resin composition may have a melt flow rate of 2 g/10 min to 60 g/10 min, 2 g/10 min to 50 g/10 min, 3 g/10 min to 50 g/10 min, or 4 g/10 min to 45 g/10 min, as measured under conditions of 190 °C and 2.16 kg.

When the crystallization temperature range, the melting temperature range, and the glass transition temperature range are satisfied, the discharge amount of the biodegradable resin composition is uniform during a spinning process, excellent spinning ability is exhibited, releasability is excellent during an injection-molding process, and formed cells may have a uniform size in a foaming process.

The biodegradable resin composition may have a tensile strength of 25 MPa or more, 27 MPa or more, 29 MPa or more, 31 MPa or more, or 31 MPa or more to 50 MPa or less according to Measurement Method 2 below:

[Measurement Method 2]

1) The biodegradable resin composition is manufactured into a specimen having a thickness of 300 $\mu$m.
2) The tensile strength of the specimen is measured at a rate of 100 mm/min using a universal testing machine.

The breaking elongation of the specimen measured using the universal testing machine may be 800 % to 1,200 %, 800 % to 1,100 %, 800 % to 1,000 %, 800 % to 950 %, or 805 % to 940 %.

The tensile strength and breaking elongation of the biodegradable resin composition may be indicators representing the mechanical properties of the biodegradable resin composition. The tensile strength and breaking elongation of the biodegradable resin composition may depend upon the presence or absence of the above-described crystallization accelerator and the content thereof. When the range is satisfied, bead formation in a biodegradable molded article may be suppressed, and the biodegradable molded article may have appropriate mechanical strength.

FIG. 1 schematically illustrates an apparatus for manufacturing a biodegradable resin composition according to an embodiment. Referring to FIG. 1, the apparatus may include a slurry agitator 100, an esterification reaction part 200, a polycondensation reaction part 300, a post-treatment part 400, a first recovery part 510, and a second recovery part 520.

The step of preparing the biodegradable resin composition may include a step of preparing a slurry including the diol and the aromatic dicarboxylic acid.

The step may include a step of mixing and treating the diol and the aromatic dicarboxylic acid.

The step may be a pretreatment step before an esterification reaction and a step of mixing and slurrying the diol and the aromatic dicarboxylic acid. Here, the diol may include a biomass-based diol component.

The diol and the aromatic dicarboxylic acid may be fed into and stirred in the slurry agitator 100 to produce the slurry. By mixing and pretreating the diol and the aromatic dicarboxylic acid to form a slurry, the diol and the aromatic dicarboxylic acid may be uniformly reacted and it is effective in speeding up the esterification reaction, thereby increasing the reaction efficiency. In particular, when an aromatic dicarboxylic acid, such as terephthalic acid, has complete crystallinity and is in powder form, its solubility in the diol is very low, making it difficult for a homogeneous reaction to occur. Therefore, the pretreatment process of slurrying may play a very important role in implementing the excellent physical properties of the biodegradable nonwoven fabric according to the present invention.

When the aromatic dicarboxylic acid is terephthalic acid, the terephthalic acid has perfect crystallinity and is a white crystal that sublimates around 300°C at normal pressure without a melting point, so its solubility in the diol is very low, making it difficult for a homogeneous reaction to occur. Accordingly, when a pretreatment process is performed before an esterification, a uniform reaction may be induced by increasing the surface area for reacting with a diol in a solid matrix of terephthalic acid.

When the aromatic dicarboxylic acid is dimethyl terephthalic acid, the dimethyl terephthalic acid may be made into a molten state at about 142°C to 170°C by the pretreatment process and reacted with the diol, so that an esterification can proceed faster and more efficiently.

Meanwhile, in the pretreatment step of preparing the slurry, the structure and properties of the biodegradable resin composition may vary depending upon the particle size, particle size distribution, pretreatment reaction conditions, etc. of the aromatic dicarboxylic acid.

The aromatic dicarboxylic acid may include terephthalic acid. In particle size distribution (PSD), the terephthalic acid may have an average particle diameter (D50) of 10 $\mu$m to 400 $\mu$m, measured by a particle size analyzer Microtrac S3500, and may have a standard deviation of 100 or less for the average particle diameter (D50). The standard deviation means the square root of the variance. The average particle diameter (D50) of the terephthalic acid may be 20 $\mu$m to 200 $\mu$m, 30 $\mu$m to 180 $\mu$m, or 50 $\mu$m to 150 $\mu$m. When the average particle diameter (D50) of the terephthalic acid satisfies the ranges, it may be more advantageous in terms of improved solubility in diol and a reaction rate.

In the pretreatment process, the diol and the aromatic dicarboxylic acid may be mixed and fed into the slurry agitator (tank) 100.

The slurry agitator 100 may have an anchor-type bottom and a height of 20 mm or more to an agitator. In addition, the slurry agitator 100 may be equipped with 2 or more rotating blades, which may be more advantageous in achieving an efficient stirring effect.

The height to the slurry agitator 100 may be 20 mm or more, i.e., the supply line and the bottom of the agitator may be almost attached to each other. In this case, a slurry may be obtained without precipitation. If the shape, form, and rotating blades of the agitator do not meet the above conditions, the aromatic dicarboxylic acid may sediment to the bottom when diol and aromatic dicarboxylic acid are initially mixed. In this case, phase separation may occur.

The pretreatment process of preparing the slurry may include a step of mixing the diol and the aromatic dicarboxylic acid and agitating at about 30°C to about 100°C at about 50 rpm to about 200 for 10 minutes or more, or 10 minutes to 200 minutes.

The diol may be the above-described characteristics.

The diol may be added batchwise or portionwise.

The diol may be added portionwise when mixed with aromatic dicarboxylic acid and when mixed with aliphatic dicarboxylic acid. The aromatic dicarboxylic acid may have the above-described characteristics. In the pretreatment step of preparing the slurry, a molar ratio of the diol to the aromatic dicarboxylic acid may be about 0.8:1 to about 1.2:1. In the pretreatment step of preparing the slurry, a molar ratio of the diol to the aromatic dicarboxylic acid may be about 0.9:1 to about 1.1:1. When the diol is added in a larger amount than the aromatic dicarboxylic acid, the aromatic dicarboxylic acid may be easily dispersed.

The step may include a step of esterifying the slurry and the aliphatic dicarboxylic acid to prepare a prepolymer. The slurry and the aliphatic dicarboxylic acid may be reacted in the esterification reaction part 200. In the esterification, the reaction time may be shortened by using the slurry.

A slurry obtained from the pretreatment step may shorten the reaction time of the esterification by 1.5 times or more. The esterification may be performed at least twice. A prepolymer to be added to a condensation polymerization process may be formed by the esterification.

For example, the esterification may be performed at once after adding an aliphatic dicarboxylic acid, or a diol and an aliphatic dicarboxylic acid to the slurry. That is, the esterification may proceed when the slurry is fed into the esterification reactor and the aliphatic dicarboxylic acid alone or the aliphatic dicarboxylic acid and the diol are fed into the esterification reactor.

The esterification may be performed at about 250°C or lower for about 0.5 hours to about 5 hours. Specifically, the esterification may be performed at about 180°C to about 250°C, about 185°C to about 240°C or about 200°C to about 240°C under normal pressure or reduced pressure until the theoretical amount of water as a by-product reaches 95%. For example, the esterification may be performed for 0.5 hours to 5.5 hours, 0.5 hours to 4.5 hours or 1 hour to 4 hours, but is not limited thereto.

The slurry may be mixed with at least one of polycarbonate diol and polyether polyol to perform a first esterification reaction. Alternatively, the polycarbonate diol and the polyether polyol may be introduced into second esterification.

In addition, after the first esterification, a mixture of the aliphatic dicarboxylic acid and the diol may be fed into the esterification reaction part 200, and a second esterification may be performed with the first esterification product. In addition, at least one of the polycarbonate diol and the polyether polyol may be added to the second esterification.

The first esterification reaction may be performed at 250 °C or lower for 1.25 hours to 4 hours. Specifically, the first esterification reaction may be carried out under normal or reduced pressure until water as a by-product theoretically reaches 95% at 180 °C to 250 °C, 185 °C to 240 °C, or 200 °C to 240 °C. For example, the first esterification reaction may be performed for 1.25 hours to 4 hours, 1.25 hours to 3.5 hours, or 2.5 hours to 3 hours, but the present invention is not limited thereto.

The second esterification reaction may be performed at about 250 °C or lower for 0.25 hours to 3.5 hours. Specifically, the second esterification reaction may be carried out under normal or reduced pressure until water as a by-product theoretically reaches 95% at 180 °C to 250 °C, 185 °C to 240 °C, or 200 °C to 240 °C. For example, the second esterification reaction may be performed for 0.5 hours to 3 hours, 1 hour to 2.5 hours or 1.5 hours to 2.5 hours, but the present invention is not limited thereto.

When the esterification is divided into the first esterification and the second esterification, the overall esterification may be precisely controlled. Accordingly, when the esterification is divisionally performed, the reaction stability and reaction uniformity of the esterification may be improved.

By the esterification reaction, a prepolymer may be formed.

The number average molecular weight of the prepolymer may be about 500 g/mol to about 10,000 g/mol. For example, the number average molecular weight of the prepolymer may be about 500 g/mol to about 8,500 g/mol, about 500 g/mol to about 8,000 g/mol, about 500 g/mol to about 7,000 g/mol, about 500 g/mol to about 5,000 g/mol, or about 800 g/mol to about 3,000 g/mol. When the number average molecular weight of the prepolymer satisfies the ranges, the molecular weight of the polymer may be efficiently increased in the condensation polymerization reaction.

The number average molecular weight may be measured using gel permeation chromatography (GPC). Specifically, data produced by gel permeation chromatography includes several items such as Mn, Mw, and Mp, but the molecular weight may be measured based on the number average molecular weight (Mn).
The crystallization accelerator may be added together with the slurry before the esterification reaction.
The crystallization accelerator may be fed into the esterification reaction part 200 during the esterification reaction.
The crystallization accelerator may be added to the product of the esterification reaction after the esterification reaction.
The crystallization accelerator may be added together with the aliphatic dicarboxylic acid.
The crystallization accelerator may be fed into the esterification reaction part 200 after the first esterification reaction and before the second esterification reaction. As the crystallization accelerator is added to the esterification reaction, the crystallization accelerator may be uniformly dispersed in the first biodegradable resin. The crystallization accelerator may have the above-described characteristics.
In the esterification reaction, a titanium-based catalyst and/or a germanium-based catalyst may be used. Specifically, the titanium-based catalyst and/or the germanium-based catalyst may be added to the slurry, and the esterification reaction may proceed.
Before the first esterification reaction, the titanium-based catalyst and/or the germanium-based catalyst may be added to the slurry, and the titanium-based catalyst and/or the germanium-based catalyst may be further added to the product of the first esterification reaction.
The content of the catalyst may be about 100 ppm to 2,000 ppm based on the total weight of diol, aromatic dicarboxylic acid, and aliphatic dicarboxylic acid. For example, a titanium-based catalyst or a germanium-based catalyst may be included in a content of about 100 ppm to about 1,600 ppm, about 150 ppm to about 1,400 ppm, about 200 ppm to about 1,200 ppm or about 250 ppm to about 1,100 ppm. When the content of the catalyst satisfies the range, the properties may be further improved.
The heat stabilizer may be added together with the slurry before the esterification. The heat stabilizer may be fed into the esterification part 200 in the middle of the esterification. The heat stabilizer may be added to the esterification product after the esterification. In addition, the heat stabilizer may be added together with the aliphatic dicarboxylic acid. In addition, the heat stabilizer may be fed into the esterification part 200 after the first esterification and before the second esterification.
The characteristics of the heat stabilizer may be as described above.
The content of the heat stabilizer may be 3,000 ppm or less based on the total weight of diol, aromatic dicarboxylic acid, and aliphatic dicarboxylic acid. Specifically, the content of the heat stabilizer may be 10 ppm to 3,000 ppm, 20 ppm to 2,000 ppm, 20 ppm to 1,500 ppm or 20 ppm to 1,000 ppm based on the total weight of diol, aromatic dicarboxylic acid, and aliphatic dicarboxylic acid. When the content of the heat stabilizer satisfies the ranges, the deterioration of the polymer due to high temperature during the reaction process may be controlled, so the terminal groups of the polymer may be reduced and the color may be improved.
After completion of the esterification, one or more selected from the group consisting of an additive such as silica, potassium or magnesium and a color-correcting agent such as cobalt acetate may be further added to the esterification product. That is, after completion of the esterification, the additive and/or the color-correcting agent may be added and stabilized, and then a polycondensation reaction may be performed. The additive and/or the color-correcting agent may be added after completion of the esterification reaction and may be fed into the polycondensation reaction part 300 together with the prepolymer.
After completion of the esterification reaction, the crystallization accelerator may be added to the product of the esterification reaction. After completion of the esterification reaction, the polycondensation reaction may proceed after the crystallization accelerator is added and stabilized. The crystallization accelerator may be fed into the polycondensation reaction part 300 together with the prepolymer, and the polycondensation process may proceed. Accordingly, the crystallization accelerator may be uniformly dispersed in the first biodegradable resin.
The first recovery part 510 may recover by-products such as water from the esterification reaction part 200. The first recovery part 510 may recover by-products generated from the esterification by applying vacuum pressure to the esterification reaction part 200 or proceeding with reflux.
The step may include a step of performing a polycondensation reaction of the prepolymer. The step of performing the polycondensation reaction may be performed as follows. The prepolymer may be fed into the polycondensation reaction part 300. In addition, the crystallization accelerator may be fed into the polycondensation reaction part 300 together with the prepolymer.
Next, the polycondensation reaction may be performed at about 180°C to about 280°C and about 10 torrs or less for about 1 hour to about 5 hours. For example, the polycondensation reaction may be performed at about 190°C to about 270°C, about 210°C to about 260°C or about 230°C to about 255°C under about 0.9 torrs or less, about 0.7 torrs or less, about 0.2 torrs to about 10 torrs, about 0.3 torrs to about 0.9 torrs or about 0.2 torrs to about 0.6 torrs for about 1.5 hours to

about 5 hours, about 2 hours to about 4.5 hours or about 2 hours to about 4 hours.

The polycondensation reaction may include first polycondensation and second polycondensation.

For example, the first polycondensation may be performed at about 260°C or lower, about 250°C or lower, about 215°C to about 250°C, about 215°C to about 245°C or about 230°C to about 245°C under about 1 torr to about 200 torr, about 2 torrs to about 100 torr, about 4 torrs to about 50 torr, about 5 torrs to about 45 torrs or about 8 torrs to about 32 torrs for about 0.5 hours to about 3.5 hours, about 0.5 hours to about 3.0 hours or about 0.5 hours to about 2.8 hours.

The second polycondensation may be performed at about 220°C to about 265°C, about 230°C to about 260°C or about 235°C to about 255°C under about 1 torr or less, about 0.8 torrs or less, about 0.6 torrs or less, about 0.1 torrs to about 1 torr, about 0.2 torrs to about 0.8 torrs or about 0.2 torrs to about 0.6 torrs for about 0.5 hours to about 4 hours, about 1 hour to about 3.5 hours or about 1.5 hours to about 3.5 hours.

Before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the prepolymer.

The number average molecular weight of the polymer may be about 20,000 g/mol or more. For example, the number average molecular weight of the polymer may be about 20,000 g/mol or more, about 30,000 g/mol or more, about 40,000 g/mol or more, about 43,000 g/mol or more, about 45,000 g/mol or more, or about 50,000 g/mol to about 70,000 g/mol. When the number average molecular weight of the polymer satisfies the range, physical properties, impact resistance, durability and formability may be further improved.

The second recovery part 520 may recover by-products such as water from the polycondensation reaction part 300. The second recovery part 520 may apply vacuum pressure to the polycondensation reaction part 300, and may recover by-products generated in the polycondensation reaction.

The second recovery part 520 may apply a vacuum pressure of about 0.1 torrs to about 1 torr to the inside of the polycondensation reaction part 300. The second recovery part 520 may apply a vacuum pressure of about 0.1 torrs to about 0.9 torrs to the inside of the polycondensation reaction part 300.

The chain extender may be added to the polymer. The polymer and the chain extender may be uniformly mixed and maintained at about 200 °C to about 260 °C for about 1 minute to about 15 minutes.

The step may include a step of manufacturing a pellet from the polymer. Specifically, the polymer may be cooled at about 15 °C or lower, about 10 °C or lower, or about 6 °C or lower, and then the cooled polymer may be cut to produce pellets. The cutting step may be performed using any pellet cutting machine used in the art without limitation, and the pellet may have various shapes. As the pellet cutting method, an underwater cutting method or a strand cutting method may be used. The pellet may be subjected to an additional post-treatment process. The pellet may be fed into the post-treatment part 400, and the post-treatment process may be performed. The post-treatment process may be performed in the post-treatment part 400. The pellet may be fed into the post-treatment part 400. Next, the post-treatment part 400 may melt and re-extrude the fed pellet by frictional heat. That is, the post-treatment part 400 may include an extruder such as a twin-screw extruder. The temperature of the post-treatment process may be about 230°C to about 270°C. The temperature of the post-treatment process may be about 230°C to about 260°C. The temperature of the post-treatment process may be about 240°C to about 265°C. The temperature of the post-treatment process may be about 240°C to about 260°C. The post-treatment process time may be about 30 seconds to about 3 minutes. The post-treatment process time may be about 50 seconds to about 2 minutes. The post-treatment process time may be about 1 minute to about 2 minutes. Next, A resin extruded by the extruder may be cooled, cut, and processed into post-treated pellets. That is, the resin extruded from the extruder may be reprocessed into a pellet through the cutting step described above. The crystallinity of the pellet may be improved in the post-treatment process. In addition, the content of the residue included in the pellet may be adjusted in the post-treatment process. In particular, the content of an oligomer contained in the pellet may be controlled by the post-treatment process. The amount of residual solvent contained in the pellet may be controlled by the post-treatment process.

In the post-treatment process, the crystallinity and mechanical properties of the biodegradable resin composition may be appropriately controlled.

After producing the pellet, the first biodegradable resin may be compounded with the above-described second biodegradable resin. In addition, the crystallization accelerator may be compounded with the first biodegradable resin together with the second biodegradable resin.

A biodegradable molded article according to the present invention includes the biodegradable resin composition including the first biodegradable resin including the first repeating unit derived from a diol, the second repeating unit derived from aromatic dicarboxylic acid, and the third repeating unit derived from aliphatic dicarboxylic acid, and a crystallization accelerator, wherein the crystallization accelerator may be included in a content of 100 ppm to 50,000 ppm based on the total weight of the biodegradable resin composition, and an isothermal crystallization time at 90 °C according to Measurement Method 1 below is 10 seconds to 900 seconds:

[Measurement Method 1]

1) The biodegradable resin composition is heated up to 220 °C at a heating rate of 10 °C/min, and then maintained for 5 minutes.
2) Next, the biodegradable resin composition is cooled up to 90 °C at a cooling rate of 100 °C/min, and an isothermal state is maintained for 100 minutes.
3) Using differential scanning calorimetry, a time at which the total area of the crystallization peak of the biodegradable resin composition becomes half is measured.

The biodegradable molded article may be a nonwoven fabric, an injection-molded article, or a foam-molded article.

The method of manufacturing the nonwoven fabric may include a step of manufacturing the biodegradable resin composition into a biodegradable yarn by a spinning process, a step of cooling the biodegradable yarn, a step of stretching the biodegradable yarn, and a step of combining the cooled biodegradable yarn to form a biodegradable yarn web.

The spinning process may include a process in which the biodegradable resin composition is melted and introduced into a spinning block. In the spinning block, the melted biodegradable resin composition may be spun from a nozzle of the extruder. By the spinning block, a filament of the biodegradable resin composition may be formed. The filament may be solidified and crystallized by cooling to produce unstretched biodegradable yarn.

A plurality of nozzles may be provided. The number of the nozzles may be 2 to 30, 10 to 30, or 18 to 30. By the plural nozzles, a plurality of filaments may be produced from the biodegradable resin composition. The pressure of the nozzles may be about 220 °C 80 $kg/cm^2$ to 120 $kg/cm^2$, 90 $kg/cm^2$ to 120 $kg/cm^2$, 90 $kg/cm^2$ to 110 $kg/cm^2$, or 95 $kg/cm^2$ to 105 $kg/cm^2$. The spinning temperature in the spinning block may be 180 °C to 250 °C, 190 °C to 250 °C, 190 °C to 240 °C, or 190 °C to 230 °C.

The biodegradable resin composition in the spinning process may have a melt flow rate in a specific range.

The biodegradable resin composition may have a melt flow rate of 2 g/10 min to 60 g/10 min, 2 g/10 min to 50 g/10 min, 3 g/10 min to 50 g/10 min, or 4 g/10 min to 45 g/10 min, as measured under conditions of 190 °C and 2.16 kg.

When the ranges are satisfied, the amount of the biodegradable resin composition discharged during a spinning process is uniform, so that excellent spinning ability may be provided, the yarn of a biodegradable nonwoven fabric manufactured from the biodegradable resin composition may not be broken, and tensile strength and elongation may be improved.

The step may include a step of cooling the biodegradable yarn.

The biodegradable yarn may be an unstretched biodegradable yarn produced from the biodegradable resin composition.

The cooling may be performed at about 1 °C to 15 °C, 1 °C to 13°C, 2 °C to 13 °C, or 5 °C to 13 °C. The cooling may be performed in a quenching chamber. The length of the quenching chamber may be about 1 m to 5 m, about 1 m to 4 m, about 1 m to 3 m, or about 1 m to 2 m.

When the range is satisfied, the phenomenon of adjacent unstretched biodegradable yarns fusing together may be suppressed.

The step may include a step of stretching the cooled biodegradable yarn.

By the stretching process, biodegradable yarn stretched 1.1 times to 3 times, 1.2 times to 3 times, 1.2 times to 2.7 times, 1.2 times to 2.6 times, or 1.2 times to 2.5 times compared to unstretched biodegradable yarn may be produced.

The stretched biodegradable yarn may be thermally treated at an appropriate temperature.

The stretched biodegradable yarn may be wound. The stretched biodegradable yarn may be wound by a winder. The winding speed of the winder may be 300 m/min to 3,000 m/min, 300 m/min to 2,500 m/min, 400 m/min to 2,500 m/min, 500 m/min to 2,500 m/min, or 250 m/min to 2,000 m/min. When the ranges are satisfied, the phenomenon of the biodegradable yarns being fused or disconnected from each other may be suppressed.

The tensile strength of the biodegradable yarn may be 0.5 g/de to 5.0 g/de, 0.5 g/de to 5.0 g/de, 0.5 g/de to 5.0 g/de, 0.5 g/de to 5.0 g/de, or 1.0 g/de to 3.0 g/de. The elongation of the biodegradable yarn may be 20 % to 400 %, 20 % to 300 %, 25 % to 300 %, 25 % to 250 %, 30 % to 250 %, or 35 % to 200 %. The tensile strength of the biodegradable yarn may be 1.0 g/de to 3.0 g/de, and the elongation thereof may be 35 % to 200 %. When the ranges are satisfied, the biodegradable yarns are easily compressed together, so they may be easily applied to a biodegradable nonwoven fabric, and the mechanical strength of the biodegradable nonwoven fabric may be improved.

The average diameter of the biodegradable yarn may be 1 $\mu$m to 500 $\mu$m, 1 $\mu$m to 400 $\mu$m, 1 $\mu$m to 300 $\mu$m, 1 $\mu$m to 200 $\mu$m, or 10 $\mu$m to 100 $\mu$m. When the ranges are satisfied, the biodegradable yarns may be easily pressed together and easily applied as a biodegradable nonwoven fabric, and the mechanical strength of the biodegradable nonwoven fabric may be improved.

The step may include a step of combining the cooled biodegradable yarn to form a biodegradable yarn web.

The method of combining the biodegradable yarns may be a carding, air-laid, water suspension, or spun bond process.

The carding process may refer to a process in which the biodegradable yarn is stacked on a collector to form a biodegradable yarn web using a device including a plurality of gear wheels.

The air-laid process may refer to a process in which the biodegradable yarn is arranged on a collector to form a biodegradable yarn web using a device moved by a flow of air.

The water suspension process may refer to a process in which the biodegradable yarn is dispersed in water, transported on a wire screen or a perforated drum, and then residual moisture of the transferred biodegradable yarn is sucked, pressurized, and dried to form a biodegradable yarn web.

The spun bond process may refer to a process in which the biodegradable yarn is formed into a Venturi web on a collector and then formed into a biodegradable yarn web.

The step may further include a step of combining the biodegradable yarn webs by at least one process of needle punch, spun lace, stitch bond, calendaring, and air through bonding.

By the process, bonding force between the biodegradable yarn webs may be strengthened, tensile strength and elongation may be improved, and fluffing of the biodegradable nonwoven fabric may be prevented.

The needle punch process may refer to a process in which a needle penetrates the biodegradable yarn web and the biodegradable yarns are entangled with each other by the barbs of the needle.

The spun lace process may refer to a process in which the biodegradable yarn web is combined by spraying a high-pressure water stream on one side and absorbing the high-pressure water stream on the other side.

The stitch bond process may refer to a process in which the biodegradable yarn web is joined by sewing thread and a needle.

The calendaring process may refer to a process of pressurizing the biodegradable yarn web and then thermosetting it.

The air through bonding process may refer to a process of bonding the biodegradable yarn web with high-temperature hot air.

The biodegradable nonwoven fabric according to the present invention may be manufactured by the processes.

As the biodegradable nonwoven fabric is lightweight and has excellent strength, high surface area and porosity, it may be applied to products that require moisture absorption.

The biodegradable nonwoven fabric may include a yarn having an average diameter of 1 $\mu$m to 500 $\mu$m, 1 $\mu$m to 400 $\mu$m, 1 $\mu$m to 300 $\mu$m, 1 $\mu$m to 200 $\mu$m, or 10 $\mu$m to 100 $\mu$m.

The biodegradable nonwoven fabric may be processed. The biodegradable nonwoven fabric may be treated with an antistatic agent to prevent static electricity. The biodegradable nonwoven fabric may be water-repellent treated with a hydrophobic material. The biodegradable nonwoven fabric may be antibacterially treated with an antibacterial material.

The biodegradable nonwoven fabric may be embossed. The biodegradable nonwoven fabric may be printed. The biodegradable nonwoven fabric may be embossed or printed to a thickness and size appropriate for an article to which it is applied.

The biodegradable resin composition may be manufactured into an injection-molded article by an injection-molding process.

The biodegradable resin composition may be a pelletized biodegradable resin composition.

The pelletized biodegradable resin composition may be manufactured into an injection-molded article at an injection-molding barrel temperature of 150 °C to 250 °C, 160 °C to 250 °C, 160 °C to 240 °C, or 160 °C to 230 °C using an injection-molding machine.

The injection-molding process may be performed by an injection-molding method such as injection compression molding, injection press molding, gas-assisted injection molding, foam molding, insert molding, in-mold coating molding, insulating mold molding, rapid heating and cooling mold molding, two-color molding, sandwich molding or ultra-high-speed injection molding.

The biodegradable resin composition has excellent injection moldability, so that, in an injection process, the release property is excellent, and the shape of an injection-molded article may be maintained.

The biodegradable resin composition may be manufactured into a foam-molded article by a foaming process.

The biodegradable resin composition may include a foaming agent.

The foaming agent may be phase-changed from solid to gas or from liquid to gas by being mixed with a biodegradable resin composition in a molten state or being injected under pressure, or may be a gas itself, and may be used to control the foaming ratio (foaming density) of a foamed sheet.

The foaming agent may include at least one selected from the group consisting of aliphatic hydrocarbons, alicyclic hydrocarbons, halogenated hydrocarbons, inorganic gas and water.

The biodegradable resin composition has excellent foamability, so that, when manufactured into a molded article, a foaming ratio may be increased, and the uniform size of foamed cells and the uniform thickness of a molded article may

be realized.

The biodegradable nonwoven fabric according to the present invention includes a biodegradable resin composition. The biodegradable resin composition includes the first biodegradable resin. The first biodegradable resin may be the same as the first biodegradable resin described above.

The biodegradable resin composition may further include a second biodegradable resin. The second biodegradable resin may be the same as the above-described second biodegradable resin.

The second biodegradable resin may be included in a content of less than 95 %, 90 % or less, 85 % or less, 80 % or less, greater than 0 wt% and 80 % or less based on the total weight of the biodegradable resin composition. When the range is satisfied, a biodegradable nonwoven fabric manufactured from the biodegradable resin composition may have soft texture, and the mechanical properties may be improved without deterioration of elasticity.

The second biodegradable resin may include polylactic acid. The polylactic acid may be the same as the above-described polylactic acid.

The biodegradable resin composition may include an inorganic filler.

The inorganic filler may be at least one selected from the group consisting of calcium sulfate, barium sulfate, talc, talc powder, bentonite, kaolinite, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

Preferably, the inorganic filler may include titanium dioxide ($TiO_2$). The titanium dioxide may act as a nucleating agent for the first biodegradable resin and/or the second biodegradable resin, so that the crystallization rate may be improved. In addition, the sticking phenomenon of a biodegradable yarn manufactured from the biodegradable resin composition may be suppressed.

In particle diameter distribution obtained by laser diffraction for the inorganic filler, a cumulative $D_{50}$ may be about 100 $\mu$m or less, about 85 $\mu$m or less, about 70 $\mu$m or less, about 50 $\mu$m or less, about 25 $\mu$m or less, about 10 $\mu$m or less, about 5 $\mu$m or less, about 3 $\mu$m or less or about 1 $\mu$m or less.

The specific surface area of the inorganic filler may be about 100 $m^2/g$ or more. For example, the specific surface area of the inorganic filler may be about 100 $m^2/g$ or more, about 105 $m^2/g$ or more or about 110 $m^2/g$ or more.

The inorganic filler may be included in a content of 0.01 wt% to 5 wt%, 0.01 wt% to 4 wt%, 0.01 wt% to 3 wt%, 0.01 wt% to 2 wt%, 0.05 wt% to 2 wt%, or 0.05 wt% to 1 wt% based on the total weight of the biodegradable resin composition. When the range is satisfied, an increase in the weight of the biodegradable nonwoven fabric may be minimized, and an appropriate biodegradation rate may be provided.

The biodegradable resin composition may include an elongation improver.

As the elongation improver, an oil such as paraffin oil, naphthenic oil, or aromatic oil, or an adipate such as dibutyl adipate, diethylhexyl adipate, dioctyl adipate, or diisopropyl adipate may be used.

The elongation improver may be included in a content of 0.001 wt% to 1 wt%, 0.005 wt% to 1 wt%, 0.01 wt% to 1 wt%, 0.01 wt% to 0.8 wt%, or 0.01 wt% to 0.5 wt% based on the total weight of the biodegradable resin composition. When the range is satisfied, the of the biodegradable nonwoven fabric may be improved.

The biodegradable resin composition may include a metal salt.

The metal salt may be included in a content of about 0.1 ppm to about 1,000 ppm based on the total weight of the biodegradable resin composition. The metal salt may be included in a content of about 1 ppm to about 500 ppm based on the total weight of the biodegradable resin composition. The metal salt may be included in a content of about 1 ppm to about 100 ppm based on the total weight of the biodegradable resin composition. The metal salt may be included in a content of about 1 ppm to about 50 ppm based on the total weight of the biodegradable resin composition. When the ranges are satisfied, the biodegradation rate of a biodegradable nonwoven fabric may be appropriately controlled.

The biodegradable resin composition may include a chain extender.

The chain extender may include isocyanate. The chain extender may be at least one selected from the group consisting of monofunctional isocyanate and polyfunctional isocyanate. The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane). The chain extender may include triisocyanate. The chain extender may include tri(4-isocyanatophenyl)methane. The chain extender may be chemically bonded to the first biodegradable resin and/or the second biodegradable resin. The chain extender may be chemically combined with a polymer contained in the first biodegradable resin and/or the second biodegradable resin. The chain extender may be bonded to a terminal of a polymer contained in the first biodegradable resin and/or the second biodegradable resin. In addition, the chain extender may be bonded to terminals of three polymers contained in the first biodegradable resin and/or the second biodegradable resin.

The chain extender may be included in a content of 0.1 wt% to 10 wt%, 0.1 wt% to 5 wt%, 0.1 wt% to 3 wt%, 0.1 wt% to 1 wt%, or 0.1 wt% to 0.5 wt% based on the total weight of the biodegradable resin composition. When the range is satisfied, the biodegradable nonwoven fabric may have improved mechanical properties. When the range is satisfied, the

biodegradable nonwoven fabric may have appropriate biodegradability. The chain extender may react with terminal carboxyl groups or unreacted carboxyl groups contained in the biodegradable resin composition. Accordingly, the biodegradable resin composition may have a low acid value. In addition, the chain extender may couple polymers contained in the biodegradable resin, thereby increasing the ratio of a high-molecular-weight polymer contained in the biodegradable resin composition. Accordingly, the mechanical properties of a biodegradable nonwoven fabric may be improved.

The biodegradable resin composition may include a heat stabilizer. The heat stabilizer may be the same as the heat stabilizer described above.

The biodegradable resin composition may include a reinforcing material.

The reinforcing material may improve the mechanical properties of the biodegradable resin composition and a biodegradable nonwoven fabric made therefrom. In addition, the reinforcing material may control the deformation characteristics of a biodegradable nonwoven fabric due to ultraviolet rays. In addition, the reinforcing material may control the biodegradability of a biodegradable nonwoven fabric.

The reinforcing material may be a fiber derived from biomass. The reinforcing material may be a fiber made of an organic material. The reinforcing material may be nanocellulose.

The nanocellulose may be one or more selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocrystalline cellulose may include elemental sodium, carboxylate sodium salt, etc. In addition, the nanocrystalline cellulose may include sulphate. The nanocrystalline cellulose may include a cellulose hydrogen sulphate sodium salt.

The nanocellulose may be represented by Formula 2 below:

[Formula 2] $$[(C_6O_5H_{10})_xSO_3Na]_y$$

In Formula 2, x may be 15 to 35, and y may be 1 to 10. The nanocellulose may have a specific surface area of about 200 $m^2/g$ to about 600 $m^2/g$. The nanocellulose may have a specific surface area of about 300 $m^2/g$ to about 500 $m^2/g$. The nanocellulose may have a weight average molecular weight of about 10,000 g/mol to about 40,000 g/mol. The nanocrystalline cellulose may have a weight average molecular weight of about 11,000 g/mol to about 35,000 g/mol.

The average diameter of the nanocellulose may be about 0.5 nm to about 10 nm. The average diameter of the nanocellulose may be about 1 nm to about 8 nm. The average diameter of the nanocellulose may be about 1.5 nm to about 7 nm.

The average length of the nanocellulose may be about 20 nm to about 200 nm. The average length of the nanocellulose may be about 30 nm to about 180 nm. The average length of the nanocellulose may be about 35 nm to about 150 nm. When the diameter and length of the nanocellulose satisfy the ranges, the properties of a biodegradable resin composition and a biodegradable nonwoven fabric obtained using the same may be further improved. The diameter and length of the nanocellulose may be measured by atomic force microscopy in a state of being dispersed in water.

The content of sulfate salt in the nanocellulose may be about 0.6 % by weight to about 1.2 % by weight based on the entire nanocrystalline cellulose. The content of sulfate salt in the nanocrystalline cellulose may be about 0.75 % by weight to about 1.1 % by weight based on the entire nanocellulose.

The pH of the nanocellulose may be 5 to 7. The pH of the nanocellulose may be 6 to 7.

The zeta potential of the nanocellulose may be about -25 mV to about -50 mV. The zeta potential of the nanocellulose may be about -30 mV to about -45 mV.

The nanocellulose may be included in a content of about 0.1 parts by weight to about 2 parts by weight based on 100 parts by weight of the biodegradable resin composition. The nanocellulose may be included in a content of about 0.3 parts by weight to about 1.5 parts by weight based on 100 parts by weight of the biodegradable resin composition. The nanocellulose may be included in a content of about 0.5 parts by weight to about 1.2 parts by weight based on 100 parts by weight of the biodegradable resin composition. The nanocellulose may be included in a content of about 0.6 parts by weight to about 1 part by weight based on 100 parts by weight of the biodegradable resin composition.

Since the nanocellulose has the above-mentioned characteristics, it may be uniformly dispersed in the biodegradable resin composition. As the nanocellulose has the above-described characteristics, a biodegradable nonwoven fabric manufactured from the biodegradable resin composition may have improved mechanical properties. As the nanocellulose has the above-described characteristics, a biodegradable nonwoven fabric manufactured from the biodegradable resin composition may have appropriate UV resistance. As the nanocellulose has the above-described characteristics, a biodegradable nonwoven fabric manufactured from the biodegradable resin composition may have an appropriate biodegradation rate.

The biodegradable resin composition may include a plasticizer.

The plasticizer may impart processability or flexibility to a biodegradable nonwoven fabric to be manufactured. The plasticizer may be glycerol, acrylate, glycerin, glycerol monostearate (GMS), sorbitol or a mixture thereof. The content of the plasticizer may be 0.1 wt% to 2 wt% or less, 0.1 wt% to 1.5 wt% or less, 0.1 wt% to 1.2 wt% or less, or 0.1 wt% to 1 wt% or less based on the total weight of the biodegradable resin composition. When the range is satisfied, a biodegradable nonwoven fabric manufactured from the biodegradable resin composition may be provided with flexibility and maintain a certain degree of water resistance over a typical period of use by a user.

The biodegradable resin composition may include a heterogeneous biodegradable resin other than the first biodegradable resin and the second biodegradable resin.

The heterogeneous biodegradable resin may be at least one selected from the group consisting of polybutylene azelate terephthalate (PBAzT), polyhydroxybutyrate (PHB), polybutylene succinate (PBS), polybutylene sebacate terephthalate (PBSeT), polybutylene succinate terephthalate (PBST), and polyhydroxyalkanoate (PHA).

The heterogeneous biodegradable resin may be included in a content of about 10 parts by weight to about 100 parts by weight based on 100 parts by weight of the first and second biodegradable resins. The heterogeneous biodegradable resin may be included in a content of about 10 parts by weight to about 60 parts by weight based on 100 parts by weight of the first and second biodegradable resins. The heterogeneous biodegradable resin may be included in a content of about 20 parts by weight to about 50 parts by weight based on 100 parts by weight of the first and second biodegradable resins. When the ranges are satisfied, the mechanical, optical, and chemical properties of the biodegradable resin may be complemented, so that a biodegradable nonwoven fabric made from the biodegradable resin composition may have appropriate UV resistance and an appropriate biodegradation rate.

The biodegradable nonwoven fabric may include the biodegradable resin composition, and the biodegradable resin composition may have a first irreversible strain rate of less than 30 % measured by Measurement Method 3 below:

[Measurement Method 3]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, the test part is pulled by 40 % more than the total length thereof.
4) The test part is recovered for 5 minutes at room temperature in a state where there is no external force.
5) The first irreversible strain rate is derived from Equation 1 below:

First irreversible strain rate = (Length of the test section after the recovery - 25 mm) / 25 mm [Equation 1]

The length of the test part in Equation 1 means the length of the test part that is recovered after being pulled by 40 % of the total length of the test part.

The biodegradable resin composition may have a second irreversible strain rate of less than 20 %, as measured by Measurement Method 4 below:

[Measurement Method 4]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, the test part is pulled by 30 % more than the total length thereof.
4) The test part is recovered for 5 minutes at room temperature in a state where there is no external force.
5) The second irreversible strain rate is derived by Equation 2 below:

Second irreversible strain rate = (Length of the test section after the recovery - 25 mm) / 25 mm [Equation 2]

The length of the test part of Equation 2 means the length of the test part that is recovered after being pulled by 30 % of the total length of the test part.

The biodegradable resin composition may have a third irreversible strain rate of less than 10 %, as measured by Measurement Method 5 below:

[Measurement Method 5]

1) In a state in which the biodegradable resin composition is placed between a pair of flat stainless steel molds, it is compressed at 200 °C under a pressure of 20 Mpa to manufacture a biodegradable resin composition sheet having a thickness of 300 μm.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, it is pulled by 20 % more than the total length of the test part.
4) The test part is recovered for 5 minutes at room temperature in a state where there is no external force.
5) The third irreversible strain rate is derived by Equation 3 below:

third irreversible strain rate = (Length of the test section after the recovery - 25 mm) / 25 mm [Equation 3]

The length of the test part of Equation 3 means the length of the test part that is recovered after being pulled by 20 % of the total length of the test part.

The biodegradable resin composition may have a fourth irreversible strain rate of less than 5 %, as measured by Measurement Method 6 below:

[Measurement Method 6]

1) In a state in which the biodegradable resin composition is placed between a pair of flat stainless steel molds, it is compressed at 200 °C under a pressure of 20 Mpa to manufacture a biodegradable resin composition sheet having a thickness of 300 μm.
2) The biodegradable resin composition sheet is cut to manufacture a sample including a test part having a width of 3.18 mm and a length of 25 mm.
3) The test part is pulled at a speed of 10 mm/min in a longitudinal direction at room temperature. Here, it is pulled by 10 % more than the total length of the test part.
4) The test part is recovered for 5 minutes at room temperature in a state where there is no external force.
5) The fourth irreversible strain rate is derived by Equation 4 below:

Fourth irreversible strain rate = (Length of the test section after the recovery - 25 mm) / 25 mm [Equation 4]

The length of the test part of Equation 4 means the length of the test part that is recovered after being pulled by 10 % of the total length of the test part.

The irreversible strain rate may be an indicator representing the elastic recovery and stretchability of the biodegradable nonwoven fabric in the absence of external force. In addition, an irreversible strain rate below a specific range may be an indicator representing that the biodegradable resin composition can be manufactured into ultrafine fibers having a diameter of less than 3 μm by a melt-blown process, and thus a manufactured biodegradable nonwoven fabric can have a soft texture. In addition, an irreversible strain rate below a specific range may be an indicator representing that, even if the biodegradable resin composition is manufactured into a single fiber having a diameter of 10 μm to 15 μm by a spinning process, the manufactured biodegradable nonwoven fabric can have soft texture. In addition, an irreversible strain rate below a specific range may be an indicator representing that the manufactured biodegradable nonwoven fabric exhibits soft texture and, at the same time, the nonwoven fabric can exhibit elasticity in a temperature range of about 15°C to 40 °C generally used.

Specifically, the irreversible strain rate may be derived by referring to FIGS. 2 and 3. FIG. 2 schematically illustrates a process of manufacturing a biodegradable resin composition sheet according to an embodiment. FIG. 3 schematically illustrates a method of measuring the irreversible strain rate of a test part according to an embodiment.

Referring to FIGS. 2 and 3, the biodegradable resin composition may be placed between a pair of flat stainless steel molds 100 and 200. Next, a pressure of 20 Mpa may be applied to the pair of flat stainless steel molds 100 and 200 at 200 °C. By the pressure, the biodegradable resin composition is compressed, thereby manufacturing a biodegradable resin composition sheet 300 having a thickness of 300 μm.

The biodegradable resin composition sheet 300 may be manufactured into a sample 400 including a test part 500 having a width of 3.18 mm and a length of 25 mm according to ASTM318 standard.

At room temperature, the opposite ends 600, except for the test part 500, of the sample 400 may be pulled in a longitudinal direction at a speed of 10 mm/min by a fixed member (not shown), thereby being pulled by 40%, 30%, 20%, or 10% more than the total length (L) of the test part 500.

Next, the test part 500 is recovered for 5 minutes at room temperature in a state where an external force is absent, and then the strain rate of the total length (L) of the test part 500 in an irreversible state may be derived according to Equations 1 to 4.

The biodegradable nonwoven fabric includes the biodegradable resin composition, and the biodegradable resin composition has a temperature of maximum loss tangent of -40 °C to 0 °C by dynamic mechanical analysis. In biodegradable nonwoven fabric, the minimum temperature of a rubbery flat region is lower than 30 °C, the rubbery flat region is higher than the temperature of the maximum loss tangent, and the loss tangent change rate is in a temperature of less than 0.025/10 °C.

Specifically, the maximum loss tangent temperature and the minimum temperature of the rubbery flat region may be derived by dynamic mechanical analysis under the following conditions:

- Measurement device: Dynamic Mechanical Analyzer(DMA) TA 2980/Q800
- Heating temperature: From -40 °C to 80 °C
- Heating rate: 10 °C/min

The loss tangent (tanδ) may be calculated by the equation expressed as tanδ=(G")/(G') after the storage modulus (G') and the loss modulus (G") at a frequency of 1 Hz are measured by the dynamic mechanical analysis.

The temperature of the maximum loss tangent may refer to a peak temperature identified as a spectrum of the loss tangent for a heating temperature region of -40 °C to 80 °C of the dynamic mechanical analysis.

The rubbery flat region is defined by a flat modulus, and may mean a region where the storage modulus and the loss modulus are maintained almost constant after the storage modulus and the loss modulus are rapidly reduced in a glass transition region, and specifically may mean a temperature range where the loss tangent change rate is in a temperature of less than 0.025/10 °C. The minimum temperature of the rubbery flat region may mean the minimum temperature value in the temperature ranges of the rubbery flat region.

The temperature range of the maximum loss tangent and the minimum temperature range of the rubbery flat region may be indicators representing that a nonwoven fabric can have elastic recovery in a used temperature range, so that the nonwoven fabric can be stretched, but not broken by an external force and can be recovered into the original length thereof.

The temperature of the maximum loss tangent of the biodegradable resin composition according to dynamic mechanical analysis is -40 °C to 0 °C, the minimum temperature of the rubbery flat region thereof is lower than 30 °C, the rubbery flat region is higher than the temperature of the maximum loss tangent, and the loss tangent change rate is in a temperature of less than 0.025/10 °C.

In addition, the biodegradable resin composition has a temperature of maximum loss tangent of -40 °C to 0 °C, as measured according to Measurement Method 7 below, and the minimum temperature of the rubbery flat region is lower than 30 °C:

[Measurement Method 7]

1) In a state in which the biodegradable resin composition is placed between a pair of flat stainless steel molds, it is compressed at 200 °C under a pressure of 20 Mpa to manufacture a biodegradable resin composition sheet having a thickness of 300 μm.
2) The biodegradable resin composition sheet is cut to manufacture a sample including a test part having a width of 5 mm and a length of 12 mm.
3) The test part is subjected to the measurement of loss tangent dependent upon temperature while heating from -40

°C to 80 °C by dynamic mechanical analysis.

4) The temperature having the maximum value of the loss tangent is derived as the temperature of maximum loss tangent.

5) A temperature range where the loss tangent change rate is in a temperature of less than 0.025/10 °C is derived as a rubbery flat region.

In the biodegradable resin composition, the maximum loss tangent temperature measured by Measurement Method 5 may be -40 °C to -5 °C, and the minimum temperature of the rubbery flat region may be less than 28 °C. In the biodegradable resin composition, the maximum loss tangent temperature measured by Measurement Method 5 may be -40 °C to - 10 °C, and the minimum temperature of the rubbery flat region may be less than 26 °C. In the biodegradable resin composition, the maximum loss tangent temperature measured by Measurement Method 5 may be -40 °C to -15 °C, and the minimum temperature of the rubbery flat region may be 15 °C or higher to 25 °C or lower. When the range is satisfied, a biodegradable nonwoven fabric manufactured from the biodegradable resin composition may exhibit excellent elasticity and have soft texture.

The crystallization temperature of the biodegradable resin composition may be 20 °C to 130 °C, 30 °C to 130 °C, 30 °C to 100 °C, 30 °C to 90 °C, 30 °C to 80 °C, or 30 °C to 70 °C. When the biodegradable resin composition has a crystallization temperature in the range, the biodegradable resin composition may be extruded and rapidly crystallized when manufacturing the biodegradable nonwoven fabric. Accordingly, the breakage of a manufactured biodegradable yarn may be prevented, and the entanglement of the biodegradable yarns may be suppressed due to an appropriate crystallization rate. Therefore, the biodegradable resin composition having the crystallization temperature may be an indicator representing that the tensile strength and the elongation can be improved.

The crystallization temperature may be measured according to ASTM D3417. Specifically, the crystallization temperature may be measured by heating from 40 °C to 200 °C at a rate of 10 °C/min using differential scanning calorimetry (DSC), and then performing a first thermal history removal process of isothermally heating for 5 minutes, and then performing a second cooling process of cooling from 200 °C to -50 °C at a rate of 10 °C/min and isothermally heating for 5 minutes.

The biodegradable resin composition may have a melt index.

After pressing the biodegradable resin composition using a weight of about 2.16 kg at about 190 °C according to ASTM D1238, the amount discharged for 10 minutes may be 5 g/10 min to 50 g/10 min, 10 g/10 min to 50 g/10 min, 15 g/10 min to 50 g/10 min, 20 g/10 min to 50 g/10 min, or 22 g/10 min to 50 g/10 min.

After pressing the biodegradable resin composition using a weight of about 2.16 kg at about 230 °C according to ASTM D1238, the amount discharged for 10 minutes may be 50 g/10 min to 130 g/10 min, 55 g/10 min to 130 g/10 min, 60 g/10 min to 130 g/10 min, 60 g/10 min to 125 g/10 min, or 60 g/10 min to 120 g/10 min.

After pressing the biodegradable resin composition using a weight of about 2.16 kg at about 250 °C according to ASTM D1238, the amount discharged for 10 minutes may be 100 g/10 min to 200 g/10 min, 100 g/10 min to 190 g/10 min, 100 g/10 min to 180 g/10 min, 110 g/10 min to 180 g/10 min, or 110 g/10 min to 170 g/10 min.

When the range is satisfied, the discharge amount of the biodegradable resin composition during a spinning process is uniform, so that it may have excellent spinning ability, yarns formed of a biodegradable nonwoven fabric manufactured from the biodegradable resin composition are not broken, and improved tensile strength and elongation are exhibited.

The biodegradable resin composition may be manufactured into a biodegradable nonwoven fabric by a dry-laid method, a wet-laid method, or a direct spun-laid method.

The dry-laid method may be a carding process wherein a single-fiber raw material manufactured from the biodegradable resin composition is laminated on a collector by a device including a plurality of gear wheels, or an air-laid process where a single-fiber raw material manufactured from the biodegradable resin composition is arranged on a collector by a device moving by a flow of air.

The wet-laid method may be a water suspension process wherein a single fiber raw material manufactured from the biodegradable resin composition is dispersed in water and transferred onto a wire screen or a perforated drum, and then residual moisture is sucked, pressurized, and dried.

The direct spun-laid method may be a spun bond process wherein a long-fiber raw material manufactured from the biodegradable resin composition is formed into a Venturi web on a collector, a melt-blown process wherein the biodegradable resin composition is manufactured into ultrafine fibers by high-temperature air, or an electrospinning process wherein the biodegradable resin composition is manufactured into ultrafine fibers by electro spinning.

The biodegradable resin composition according to the present invention may be manufactured not only into a biodegradable nonwoven fabric by the dry-laid method or the wet-laid method, but also into a biodegradable nonwoven fabric by a direct spun-laid process, so that the biodegradable nonwoven fabric may include an ultrafine fiber, and thus, may exhibit soft texture.

After the dry-laid method, the wet-laid method, or the direct spun-laid process, the biodegradable resin

composition may be subjected to at least one of a needle punch process, a spun lace process, a stitch bond process, calendaring, and air through bonding.

By the processes, the binding force between the biodegradable nonwoven fabric yarns may be strengthened, the tensile strength and the elongation may be improved, and the fluffing of the biodegradable nonwoven fabric may be prevented.

The needle punch process may refer to a process of piercing the biodegradable yarn web with a needle so that the biodegradable yarns are entangled with each other by the barb of the needle.

The spun lace process may refer to a process of combining the biodegradable yarn web by a process of spraying a high-pressure water stream on one side and absorbing the high-pressure water stream on the other side.

The stitch bond process may refer to a process where the biodegradable yarn web is joined by a sewing thread and a needle.

The calendaring process may refer to a process of pressurizing and then thermally fusing the biodegradable yarn web.

The air-through-bonding process may refer to a process of bonding the biodegradable yarn web with high-temperature hot air.

The biodegradable nonwoven fabric may be processed. The biodegradable nonwoven fabric may be treated with an antistatic agent to prevent static electricity. The biodegradable nonwoven fabric may be treated with a hydrophobic material for water repellency. The biodegradable nonwoven fabric may be anti-bacterially treated with an antibacterial agent.

The biodegradable nonwoven fabric may be embossed. The biodegradable nonwoven fabric may be printed. The biodegradable nonwoven fabric may be embossed or printed to have a thickness and size suitable for an article to which it is applied.

Hereinafter, the present invention will be described in more detail based on the following examples and comparative examples. However, the examples and comparative examples are provided only as examples to explain the present invention in more detail, and the present invention is not limited by the following examples and comparative examples.

## First preparation example

### Preparation Example 1-1 - Preparation of nanocellulose crystallization accelerator

Dry powder-type cellulose nanocrystals (NVC-100, manufacturer: Celluforce) having a particle size of about 1 μm to about 50 μm were dispersed in water at 1 wt%, and then ultrasonicated at an output of 20,000 J/s for 2 minutes using a tip-type ultrasonic disperser to prepare a nanocellulose crystallization accelerator.

### Preparation Example 1-2 - Preparation of titanium dioxide crystallization accelerator

Titanium dioxide ($TiO_2$) having a particle size of about 0.2 μm and being an anatase-phase crystal was dispersed in 1,4-butanediol (1,4-BDO) at 5 wt% to produce a slurry. Next, the slurry was stirred at a speed of 1,000 rpm for 2 hours, and then filtered through a 500 mesh filter to prepare a titanium dioxide crystallization accelerator.

## First example - Preparation of biodegradable resin composition

### Example 1-1

- First step: Prepolymer obtainment

1,4-butanediol (1,4-BDO) and terephthalic acid (TPA) were fed into a 5 kg esterification reactor equipped with a nitrogen inlet and a stirrer to prepare a slurry. Here, the molar ratio of the 1,4-butanediol (1,4-BDO) to terephthalic acid (TPA) was 1.4:1, and the $D_{50}$ of the terephthalic acid (TPA) was 130 μm.

The slurry was fed into a reactor through a feed line, and 250 ppm of tetrabutyl titanate (Dupont, manufactured by Tyzor TnBT), a titanium-based catalyst, was fed thereinto. Next, the slurry was heated up to 210 °C, and an esterification reaction was performed until about 90 % or more of water, a by-product, was discharged, thereby preparing the first prepolymer.

To the first esterification reaction product, 53 mol% of 1,4-butanediol (1,4-BDO) based on the total mole number of the diol component was added, 53 mol% of adipic acid (AA) based on the total mole number of the dicarboxylic acid component was added, and 200 ppm of tetrabutyl titanate (Dupont, manufactured by Tyzor TnBT), a titanium-based catalyst, based on the total weight of the diol component and the dicarboxylic acid component was added. In addition, 100

ppm of the nanocellulose crystallization accelerator according to Preparation Example 1 was added to the first esterification reaction product. Next, the second esterification reaction was performed at 220°C and atmospheric pressure for about 2 hours 30 minutes until 95 % of water, a by-product, was discharged, thereby preparing the second prepolymer having a number average molecular weight of 5,500 g/mol.

- Second step: Polycondensation reaction

The second prepolymer was transferred to a 5 kg-sized polycondensation reactor. 150 ppm of tetrabutyl titanate (Dupont, manufactured by Tyzor TnBT), a titanium-based catalyst, and 500 ppm of a triethylene phosphate stabilizer were added based on the total weight of the second prepolymer, and then stabilized for about 10 minutes.

Next, a polycondensation reaction was performed at 0.5 torrs for 2 hours after heating to 240 °C, thereby preparing a biodegradable resin composition.

**Example 1-2**

A biodegradable resin composition was prepared in the same manner as the preparation process of Example 1-1 except that 500 ppm of the nanocellulose crystallization accelerator according to Preparation Example 1-1 was added instead of adding 100 ppm of the nanocellulose crystallization accelerator according to Preparation Examples 1-1 to the first esterification reaction product as in Example 1-1.

**Example 1-3**

A biodegradable resin composition was prepared in the same manner as the preparation process of Example 1-1 except that 200 ppm of the nanocellulose crystallization accelerator according to Preparation Example 1-1 and 3,000 ppm of the titanium dioxide crystallization accelerator according to Preparation Example 2 were added instead of adding 100 ppm of the nanocellulose crystallization accelerator according to Preparation Examples 1-1 to the first esterification reaction product as in Example 1-1, and 1,000 ppm of calcium stearate, an external lubricant, was added in the polycondensation reaction.

**Example 1-4**

the biodegradable resin composition according to Example 1-1, 500 ppm of the titanium dioxide crystallization accelerator according to Preparation Example 1-2, and 2,000 ppm of calcium stearate, an external lubricant, were fed into a T-die extrusion-molding apparatus (cp20mm, L/D=25), an extrusion-molding machine (Toyo Seiki Seisaku-sho, Ltd.) equipped with a twin screw, and kneaded at about 140 °C, thereby preparing a biodegradable resin composition.

**Example 1-5**

A biodegradable resin composition was prepared in the same manner as the preparation process of Example 1-4 except that 6,000 ppm of the titanium dioxide crystallization accelerator according to Preparation Example 1-2, and 500 ppm of calcium stearate, an external lubricant, were added instead of adding 500 ppm of the titanium dioxide crystallization accelerator according to Preparation Example 1-2, and 2,000 ppm of calcium stearate, an external lubricant, as in Example 1-4.

**Example 1-6**

A composition containing the biodegradable resin composition according to Example 1-1 and PLA (L130, Total Corbion Company) in a weight ratio of 8:2, 500 ppm of the titanium dioxide crystallization accelerator according to Preparation Example 1-2 and 2,000 ppm of calcium stearate, an external lubricant, were fed into a T-die extrusion-molding apparatus (cp20mm, L/D=25), an extrusion-molding machine (Toyo Seiki Seisaku-sho, Ltd.) equipped with a twin screw, and kneaded at about 140 °C, thereby preparing a biodegradable resin composition.

**Comparative Example 1-1**

A biodegradable resin composition was prepared in the same manner as the preparation process of Example 1-1 except that the nanocellulose crystallization accelerator according to Preparation Example 1-1 was not added to the first esterification reaction product.

**Comparative Example 1-2**

The biodegradable resin composition according to Example 1-1 and 8,000 ppm of the nanocellulose crystallization accelerator according to Preparation Example 1-1 were fed into a T-die extrusion-molding apparatus (cp20mm, L/D=25), an extrusion-molding machine (Toyo Seiki Seisaku-sho, Ltd.) equipped with a twin screw, and kneaded at about 140 °C, thereby preparing a biodegradable resin composition.

**Comparative Example 1-3**

The biodegradable resin composition according to Example 1-1 and 63,000 ppm of the titanium dioxide crystallization accelerator according to Preparation Example 1-2 were fed into a T-die extrusion-molding apparatus (cp20mm, L/D=25), an extrusion-molding machine (Toyo Seiki Seisaku-sho, Ltd.) equipped with a twin screw, and kneaded at about 140 °C, thereby preparing a biodegradable resin composition.

**Comparative Example 1-4**

A composition containing the biodegradable resin composition according to Example 1-1 and PLA (L130, Total Corbion Company) in a weight ratio of 8:2, 63,000 ppm of the titanium dioxide crystallization accelerator according to Preparation Example 1-2 and 2,000 ppm of calcium stearate, an external lubricant, were fed into a T-die extrusion-molding apparatus (cp20mm, L/D=25), an extrusion-molding machine (Toyo Seiki Seisaku-sho, Ltd.) equipped with a twin screw, and kneaded at about 140 °C, thereby preparing a biodegradable resin composition.

**<u>First experimental examples</u>**

**Experimental Example 1-1** - **Isothermal crystallization time**

The biodegradable resin composition of each of Examples 1-1 to 1-6 and Comparative Examples 1-1 to 1-4 was heated up to 220 °C at a heating rate of 10 °C/min, and then maintained for 5 minutes. Next, the temperature was lowered to 70 °C at a cooling rate of 100 °C/min, and then an isothermal state was maintained for 100 minutes.

Next, using differential scanning calorimetry, a time at which the total area of the crystallization peak of the biodegradable resin composition becomes half was measured. Results are shown in Table 1 below.

**Experimental Example 1-2** - **Glass transition temperature, crystallization temperature, melting temperature**

Using differential scanning calorimetry according to Experimental Example 1-1, the glass transition temperature (Tg), crystallization temperature (Tc), and melting temperature (Tm) of the biodegradable resin composition of each of Examples 1-1 to 1-6 and Comparative Examples 1-1 to 1-4 were measured. Results are shown in Table 1 below.

**Experimental Example 1-3** - **Melt flow rate**

According to ASTM D1238, the biodegradable resin composition of each of Examples 1-1 to 1-6 and Comparative Examples 1-1 to 1-4 was pressed using a 2.16 kg weight at 190 °C, and then the amount discharged for 10 minutes was measured. Results are shown in Table 1 below.

**Experimental Example 1-4** - **Tensile strength, breaking elongation**

The biodegradable resin composition of each of Examples 1-1 to 1-6 and Comparative Examples 1-1 to 1-4 was manufactured into a specimen with a thickness of 300 μm according to KSM6518. Next, the tensile strength ($kgf/mm^2$=9.8 MPa) and breaking elongation of the specimen were measured at a rate of 100 mm/min according to ASTM D638 using a universal testing machine (UTM, model number: 4206-001) manufactured by INSTRON Company. Results are shown in Table 1 below.

**Experimental Example 1-5** - **Spinning ability evaluation**

The spinning ability of the biodegradable resin composition of each of Examples 1-1 to 1-6 and Comparative Examples 1-1 to 1-4 was evaluated according to the following criteria using a melt-spinning (filament) facility under conditions such as a spinning speed of 24 g/min, a melting temperature of 210 °C, a winder draw ratio of 2.2, and a quenching air temperature of 10 °C. Results are shown in Table 1 below.

- ◎: Nozzle spinning is smooth, and fiber breakage and merging do not occur.

- △: Nozzle spinning is smooth, but fibers are broken or merged

- ×: Nozzle is clogged, so spinning is not possible.

**Experimental Example 1-6** - **Injection moldability evaluation**

The biodegradable resin composition of each of Examples 1-1 to 1-6 and Comparative Examples 1-1 to 1-4 was maintained in a 200 °C mold for 5 minutes, and then the injection moldability thereof was evaluated according to the following criteria. Results are shown in Table 1 below.

- ◎: Releasability is excellent and the shape of an injection-molded article is maintained.

- △: No residue occurs in a mold, but flow marks occur on an injection-molded article.

- ×: Residue occurs in a mold, or carbon marks occur on an injection-molded article.

**Experimental Example 1-7** - **Foamability evaluation**

A mixture of the biodegradable resin composition of each of Examples 1-1 to 1-6 and Comparative Examples 1-1 to 1-4 and PLA (4032D, Nature Works Company) mixed in a weight ratio of 3:7 was fed into gas-foaming equipment, and then the foamability thereof was evaluated according to the following criteria. Results are shown in Table 1 below.

- ◎: Maximum foaming ratio is 5 times or more.

- o: Maximum foaming ratio is 3 times or more and less than 5 times.

- △: Maximum foaming ratio is 1 times or more and less than 3 times.

- ×: Not foamed

**Experimental Example 1-8** - **Biodegradability**

For the biodegradable resin composition of each of Examples 1-1 to 1-6 and Comparative Examples 1-1 to 1-4, the aerobic biodegradability was measured for 6 months under composting conditions according to ISO 14855. Results are shown in Table 1 below.

[Table 1]

| Classification | | Unit | Example 1-1 | Example 1-2 | Example 1-3 | Example 1-4 | Example 1-5 | Example 1-6 | Comparative Example 1-1 | Comparative Example 1-2 | Comparative Example 1-3 | Comparative Example 1-4 |
|---|---|---|---|---|---|---|---|---|---|---|---|---|
| Crystallization accelerator | Preparation Examplel-1 | ppm | 100 | 500 | 200 | - | - | - | - | 8,000 | - | - |
| | Preparation Example 1 1-2 | | - | - | 3,00 0 | 500 | 6,00 0 | 500 | - | - | 63,00 0 | 63,00 0 |
| External Lubricant | | | - | - | 1,00 0 | 2,00 0 | 500 | 2,00 0 | - | - | - | 2,000 |
| Isothermal crystallization time (90°C) | | sec | 563 | 784 | 50 | 41 | 58 | 40 | >3,60 0 | 923 | 110 | 95 |

(continued)

| Classification | Unit | Example 1-1 | Example 1-2 | Example 1-3 | Example 1-4 | Example 1-5 | Example 1-6 | Comparative Example 1-1 | Comparative Example 1-2 | Comparative Example 1-3 | Comparative Example 1-4 |
|---|---|---|---|---|---|---|---|---|---|---|---|
| Glass transition temperature | °C | -28 | -28 | -29 | -30 | -33 | -29 1)/ 61 2) | -28 | -29 | -30 | -30 1)/61 2) |
| Crystallization temperature | °C | 70 | 50 | 80 | 79 | 83 | 81 | 36 | 59 | 81 | 82 |
| Melting temperature | °C | 119 | 120 | 120 | 122 | 124 | 124 3) /172 4) | 119 | 118 | 124 | 124 3)/ 172 4) |
| Melt flow rate (190°C, 2.16kg) | g/ 10 min | 4 | 30 | 30 | 5 | 45 | 30 | 4 | 30 | 6 | 15 |
| Tensile strength | MPa | 43 | 33 | 28 | 43 | 31 | 19 | 40 | 19 | 22 | 20 |
| Breaking elongation | % | 940 | 890 | 810 | 922 | 805 | 450 | 920 | 540 | 610 | 380 |
| Spinning ability evaluation | - | ◎ | ◎ | ◎ | ◎ | ◎ | ◎ | × | Δ | × | × |
| Injection moldability evaluation | - | ◎ | ◎ | ◎ | ◎ | ◎ | ◎ | × | × | Δ | Δ |
| Foamability evaluation | - | ◎ | ◎ | ○ | ◎ | ○ | ◎ | ○ | Δ | × | × |
| Biodegradability | % | 96.3 | 95.2 | 94.5 | 96.2 | 95.5 | 90 | 95 | 94.5 | 94 | 90 |

1) Glass transition temperature of PBAT resin
2) Glass transition temperature of PLA resin
3) Melting temperature of PBAT resin
4) Melting temperature of PLA resin

As shown in Table 1, it was confirmed that the biodegradable resin compositions of Examples 1-1 to 1-6 exhibited biodegradability equal or superior to that of the biodegradable resin compositions of Comparative Examples 1-1 to 1-4.

In addition, it was confirmed that, as the biodegradable resin compositions of Examples 1-1 to 1-6 contained a crystallization accelerator in a content of 100 ppm to 50,000 ppm and satisfied an isothermal crystallization time of 10 seconds to 900 seconds at 90 °C, the spinning ability, injection moldability, foamability and mechanical properties were excellent.

## Second preparation examples

### < Preparation of pretreated nanocellulose >

Dry powder-type cellulose nanocrystals (NVC-100, Manufacturer: Celluforce) having a particle size of about 1 $\mu$m to about 50 $\mu$m were dispersed in water at 1 % by weight, and then sonicated at an output of 20,000 J/s for 1 minute using a tip-type ultrasonic disperser, thereby producing pretreated nanocellulose.

### < Preparation of PBAT resins >

### Preparation of PBAT resin #1

- First step: Pretreating to obtain slurry

In a catalyst-free state, the nanocellulose pretreated according to the preparation example, 1,4-butanediol (1,4-BDO) and terephthalic acid (TPA) were mixed and fed into a slurry tank (the bottom of the slurry tank was an anchor type, the height to an agitator was 40 mm, and three rotary blades were provided). Here, a molar ratio of the 1,4-butanediol (1,4-BDO) to the terephthalic acid (TPA) was 1.4:1, and the $D_{50}$ of the terephthalic acid (TPA) was 130 $\mu$m. The mixture fed into the slurry tank was stirred at 60°C and 100 rpm for 1 hour, and a slurry was obtained without phase separation.

- Second step: Obtaining prepolymer

The slurry obtained in the first step was fed into a reactor through a supply line, a titanium-based catalyst, tetrabutyl titanate (Dupont, manufactured by Tyzor TnBT), was fed at 250 ppm based on the total weight of the slurry into the reactor, and then performing first esterification at 220°C under normal pressure for about 1 hour and 30 minutes until 95% of by-product water was discharged.

To the first esterification reaction product, 53 mol% of 1,4-butanediol (1,4-BDO) based on the total number of moles of the diol component, 53 mol% of adipic acid (AA) based on the total number of moles of the dicarboxylic acid component, and 200 ppm of a titanium-based catalyst, tetrabutyl titanate (Dupont, manufactured by Tyzor TnBT), based on the total weight of moles of the diol and dicarboxylic acid components were added. Next, a second esterification reaction was performed at 220°C and under normal pressure for about 2 hours 30 minutes until 95% of by-product water was discharged, thereby producing a prepolymer having a number average molecular weight of 5,500 g/mol.

- Third step: Performing polycondensation reaction

150 ppm of a titanium-based catalyst, tetrabutyl titanate (Dupont, manufactured by Tyzor TnBT), and 500 ppm of a triethylene phosphate stabilizer were added based on the total weight of the prepolymer produced in the second step, and then stabilized for about 10 minutes. Next, after raising the temperature to 240 °C, a polycondensation reaction was performed under 0.5 torrs for 2 hours, thereby producing a polymer having a number average molecular weight of 34,000 g/mol. Next, the polymer was cooled to 5 °C and cut with a pellet cutter, thereby obtaining PBAT resin #1 pellet.

**Production of PBAT resins #2 to #5**

PBAT resin #2 to #5 pellets were manufactured in the same process as in the production process of the PBAT resin #1, except that components and contents shown in the following Table 2 and the temperatures and times of the first and second esterification reactions and the temperatures and times of the polycondensation reaction shown in the following Table 3 were used.

[Table 2]

| Classification | 1,4-BDO[1)] | TPA[2)] | AA[3)] | CNC[4)] |
|---|---|---|---|---|
| Unit | mol % | | | ppm[5)] |
| PBAT resin #1 | 140 | 47 | 52 | 500 |
| PBAT resin #2 | 137 | 49 | 52 | 400 |
| PBAT resin #3 | 140 | 48 | 50 | 200 |
| PBAT resin #4 | 138 | 50 | 51 | 200 |
| PBAT resin #5 | 141 | 51 | 40 | 500 |

1) 1,4-BDO: 1,4-butanediol
2) TPA: Terephthalic acid
3) AA: Adipic acid
4) CNC: Pretreated nanocellulose
5) ppm: Based on total weight of 1,4-BDO, TPA and AA

[Table 3]

| Classification Unit | First esterification reaction | | Second esterification reaction | | Polycondensation reaction | |
|---|---|---|---|---|---|---|
| | Temperature °C | Time min | Temperature °C | Time min | Temperature °C | Time min |
| PBAT resin #1 | 220 | 90 | 220 | 150 | 240 | 300 |
| PBAT resin #2 | 210 | 90 | 210 | 150 | 240 | 310 |
| PBAT resin #3 | 220 | 90 | 220 | 150 | 240 | 315 |
| PBAT resin #4 | 210 | 90 | 210 | 150 | 250 | 300 |
| PBAT resin #5 | 230 | 90 | 230 | 150 | 250 | 300 |

< **Preparation of biodegradable resin compositions** >

**Preparation of biodegradable resin composition #1**

A raw material composition was prepared using components and contents shown in the following Table 4. Next, the raw material composition was fed into a T-die extrusion molding device (ϕ 20 mm, L/D=25, manufactured by Toyo Seiki Seisaku-sho, Ltd.) as an extrusion molding machine equipped with a twin screw, and kneaded at 160 °C, thereby producing a pelletized biodegradable resin composition #1.

**Preparation of biodegradable resin compositions #2 to #9**

Biodegradable resin compositions #2 to #9 were prepared in the same process as in the preparation process of the biodegradable resin composition #1, except that components and contents shown in the following Table 4 were used.

[Table 4]

| Classification | PBAT | PLA 1) | Inorganic filler 2) | Lubricant 3) | Antioxidant 4) | Chain extender 5) |
|---|---|---|---|---|---|---|
| Unit | wt% | | | | | |
| Biodegradable resin composition #1 | PBAT resin #1 residue | - | 0.5 | 0.4 | 0.5 | - |
| Biodegradable resin composition #2 | PBAT resin #2 residue | - | 0.5 | 0.4 | - | 0.1 |
| Biodegradable resin composition #3 | PBAT resin #3 residue | - | 1.0 | 0.6 | 0.5 | 0.2 |
| Biodegradable resin composition #4 | PBAT resin #4 residue | - | 0.1 | 0.4 | - | - |
| Biodegradable resin composition #5 | PBAT resin #1 residue | 30 | 0.5 | 0.4 | 0.5 | 0.1 |
| Biodegradable resin composition #6 | PBAT resin #5 residue | - | 0.3 | 0.4 | 0.5 | - |
| Biodegradable resin composition #7 | PBAT resin #1 residue | 50 | 0.3 | 0.4 | 0.5 | 0.3 |
| Biodegradable resin composition #8 | PBAT resin #1 residue | 80 | 0.5 | 0.4 | 0.5 | 0.1 |
| Biodegradable resin composition #9 | PBAT resin #1 residue | 95 | 0.5 | 0.4 | 0.5 | 0.1 |
| Biodegradable resin composition #10 | PBAT resin #2 residue | 98 | 0.5 | 0.4 | - | 0.3 |

(continued)

| Classification | PBAT | PLA[1)] | Inorganic filler[2)] | Lubricant[3)] | Antioxidant [4)] | Chain extender [5)] |
|---|---|---|---|---|---|---|
| Unit | wt% | | | | | |
| 1) PLA: L105, Total Corbion Company<br>2) Inorganic filler: titanium dioxide (average particle diameter: about 0.2 μm, crystal structure: Anatase)<br>3) Lubricant: Mixture of stearate-based and wax-based lubricant<br>4) Antioxidant: Phenolic antioxidant, AO-60<br>5) Chain extender: Joncryl series, ADR 4400, BASF Company | | | | | | |

## Second examples

### Example 2-1

The biodegradable resin composition #1 was supplied to the die of a melt-blown manufacturing apparatus. The temperature of the die was set to 230 °C. Using a melt-blown nozzle (0.32 mmφ, distance between the holes of each nozzle: 0.20 mm), the biodegradable resin composition #1 was discharged together with high-temperature, high-velocity air (250°C, air volume: 600 $m^3$/hr) blown from both sides of the nozzle at a discharge amount of 0.52 g/min per single hole of the nozzle. Next, a cooling and dispersion process was performed by cooling air (15 °C, air flow rate: 6,000 $m^3$/hr), and a melt-blown nonwoven fabric was blown onto a carrier film such that the melt-blown nonwoven fabric had a weight of 70 g/$m^2$ at 120 mm, a distance from the surface of a spinneret to a collector (DCD), thereby manufacturing a melt-blown nonwoven fabric.

### Example 2-2

A melt-blown nonwoven fabric was manufactured in the same manner as in Example 2-1, except that the biodegradable resin composition #2 was used instead of the biodegradable resin composition # 1 of Example 2-1.

### Example 2-3

A melt-blown nonwoven fabric was manufactured in the same manner as in Example 2-1, except that the biodegradable resin composition #3 was used instead of the biodegradable resin composition # 1 of Example 2-1.

### Example 2-4

A melt-blown nonwoven fabric was manufactured in the same manner as in Example 2-1, except that a biodegradable resin composition #4 was used instead of the biodegradable resin composition # 1 of Example 2-1.

### Example 2-5

A melt-blown nonwoven fabric was manufactured in the same manner as in Example 2-1, except that the biodegradable resin composition #5 was used instead of the biodegradable resin composition # 1 of Example 2-1.

### Example 2-6

A melt-blown nonwoven fabric was manufactured in the same manner as in Example 2-1, except that the biodegradable resin composition #6 was used instead of the biodegradable resin composition # 1 of Example 2-1.

### Comparative Example 2-1

A melt-blown nonwoven fabric was manufactured in the same manner as in Example 2-1, except that the biodegradable resin composition #7 was used instead of the biodegradable resin composition # 1 of Example 2-1.

### Comparative Example 2-2

A melt-blown nonwoven fabric was manufactured in the same manner as in Example 2-1, except that the

biodegradable resin composition #8 was used instead of the biodegradable resin composition # 1 of Example 2-1.

**Comparative Example 2-3**

A melt-blown nonwoven fabric was manufactured in the same manner as in Example 2-1, except that the biodegradable resin composition #9 was used instead of the biodegradable resin composition # 1 of Example 2-1.

**Comparative Example 2-4**

A melt-blown nonwoven fabric was manufactured in the same manner as in Example 2-1, except that the biodegradable resin composition #10 was used instead of the biodegradable resin composition # 1 of Example 2-1.

**Second experimental examples**

**Experimental Example 2-1 - Irreversible strain rate**

Each of the biodegradable resin compositions #1 to #10 was placed between a pair of flat stainless steel molds, and pressed at 200 °C under a pressure of 20 Mpa to manufacture a biodegradable resin composition sheet having a thickness of 300 $\mu$m.

Next, the biodegradable resin composition sheet was cut to manufacture a sample containing a test part having a width of 3.18 mm and a length of 25 mm.

Next, the test part was pulled at a speed of 10 mm/min in a longitudinal direction at room temperature. Here, it was pulled by 40%, 30%, 20%, or 10% more than the total length of the test part.

Next, the test part was recovered for 5 minutes at room temperature in the absence of external force, and then the first to fourth irreversible strain rates were derived according to Equations 1 to 4 below using a universal testing machine (UTM, model number: 4206-001) manufactured by INSTRON Company. Results are shown in Table 5 below:

First irreversible strain rate = (Length of the test section after the recovery - 25 mm) / 25 mm [Equation 1]

The length of the test part in Equation 1 means the length of the test part that is recovered after being pulled by 40 % of the total length of the test part.

Second irreversible strain rate = (Length of the test section after the recovery - 25 mm) / 25 mm [Equation 2]

The length of the test part of Equation 2 means the length of the test part that is recovered after being pulled by 30 % of the total length of the test part.

Third irreversible strain rate = (Length of the test section after the recovery - 25 mm) / 25 mm [Equation 3]

The length of the test part of Equation 3 means the length of the test part that is recovered after being pulled by 20 % of the total length of the test part.

Fourth irreversible strain rate = (Length of the test section after the recovery - 25 mm) / 25 mm [Equation 4]

The length of the test part of Equation 4 means the length of the test part that is recovered after being pulled by 10 % of the total length of the test part.

**Experimental Example 2-2 - Dynamic mechanical analysis**

Each of the biodegradable resin compositions #1 to #10 was placed between a pair of flat stainless steel molds, and pressed at 200 °C under a pressure of 20 Mpa to manufacture a biodegradable resin composition sheet having a thickness of 300 $\mu$m.

Next, the biodegradable resin composition sheet was cut to manufacture a sample containing a test part having a width of 5 mm and a length of 12 mm.

Next, for the test part, the maximum loss tangent temperature and the minimum temperature of the rubbery flat region were derived by dynamic mechanical analysis under the following conditions. The rubbery flat region was higher

than the maximum loss tangent temperature, and the loss tangent change rate was derived in a temperature range of less than 0.025/10 °C. Results are shown in Table 5 below:

- Measurement device: Dynamic Mechanical Analyzer(DMA) TA 2980/Q800
- Heating temperature: From -40 °C to 80 °C
- Heating rate: 10 °C/min

**Experimental Example 2-3** - **Crystallization temperature**

The crystallization temperature and melting temperature of each of the biodegradable resin compositions #1 to #10 were measured according to ASTM D3417. Specifically, the first thermal history removal process was performed by heating from 40 °C to 220 °C at a rate of 10 °C/min and isothermally maintaining for 5 minutes using differential scanning calorimetry (DSC), and the second cooling process was performed by cooling from 200 °C to -50 °C at a rate of 10 °C/min and isothermally maintaining for 5 minutes. Again, the process of heating from -50 °C to 220 °C at a rate of 10 °C/min was performed. Through these processes, the crystallization temperature and the melting temperature were confirmed. Results are shown in Table 5 below.

**Experimental Example 2-4** - **Melt index**

Each of the biodegradable resin compositions #1 to #10 was pressed using a 2.16 kg weight under temperature conditions of 190 °C, 230 °C and 250 °C according to ASTM D1238, and then the amount discharged for 10 minutes was measured. Results are shown in Table 5 below.

**Experimental Example 2-5** - **Biodegradability**

For each of the nonwoven fabrics manufactured in Examples 2-1 to 2-6 and Comparative Examples 2-1 to 2-4, the amount of generated carbon dioxide was measured according to KS M3100-1 to evaluate biodegradability. Specifically, an inoculation container containing only compost manufactured in a compost factory was prepared, and a test container in which a nonwoven fabric was fed in an amount of 5 wt% of the dry weight of the compost to the compost was prepared. Next, the culture was performed for 180 days under the conditions of a temperature of about 58 ± 2°C, a moisture content of 50%, and an oxygen concentration of 6% or more, and the carbon dioxide generated from each test container was captured and titrated with a phenolphthalein solution to measure the amount of carbon dioxide generated from each test container. The biodegradability was calculated according to the following Calculation Formula 1 with the measured carbon dioxide generation amount. Results are shown in Table 5 below:

[Calculation Formula 1]

$$\text{Biodegradability (\%)} = \frac{(\text{CO}_2 \text{ emissions from test container}) - (\text{CO}_2 \text{ emissions from inoculum container})}{\text{Theoretical CO}_2 \text{ emissions from biodegradable resin}} \text{ X } 100$$

**Experimental Examples 2-6** - **Texture**

The texture of each of the nonwoven fabrics manufactured in Examples 2-1 to 2-6 and Comparative Examples 2-1 to 2-4 was evaluated by hand by 10 users. Each user scored from 1 to 10, and a higher score was given as the touch was softer. The results of the average scores of 10 users are shown in Table 5 below.

[Table 5]

| Classification | unit | Example 2-1 | Example 2-2 | Example 2-3 | Example 2-4 | Example 2-5 | Example 2-6 | Comparative Example 2-1 | Comparative Example 2-2 | Comparative Example 2-3 | Comparative Example 2-4 |
|---|---|---|---|---|---|---|---|---|---|---|---|
| Biodegradable resin composition | | Biodegradable resin composition #1 | Biodegradable resin composition #2 | Biodegradable resin composition #3 | Biodegradable resin composition #4 | Biodegradable resin composition #5 | Biodegradable resin composition #6 | Biodegradable resin composition #7 | Biodegradable resin composition #8 | Biodegradable resin composition #9 | Biodegradable resin composition #10 |
| First irreversibl e strain rate | % | 22 | 19 | 16 | 22 | 28 | 22 | 42 | N.A.[1)] | N.A.[1)] | N.A.[1)] |
| Second irreversibl e strain rate | | 14 | 12 | 10 | 14 | 18 | 14 | 25 | N.A.[1)] | N.A.[1)] | N.A.[1)] |
| Third irreversibl e strain rate | | 6 | 5 | 4 | 6 | 8 | 5 | 15 | N.A.[1)] | N.A.[1)] | N.A.[1)] |
| Fourth irreversibl e strain rate | | 0 | 0 | 0 | 0 | 4 | 0 | 5 | 13 | 15 | 17 |
| Maximum loss tangent temperatu re | °C | -22.8 | -22.2 | -21.9 | -22.7 | -10.2 | -22.5 | -8.1 | 70.2 | 70.1 | 71 |
| Minimum temperatu re of rubbery flat region | | 19.3 | 19.5 | 21.1 | 19.3 | 29.9 | 19.6 | 37.2 | N.A.[2)] | N.A.[2)] | N.A.[2)] |
| Crystallization temperatu re | | 87 | 85 | 88 | 79.7 | 95.2 | 79.5 | 94.5 | 140 | 142 | 143 |
| First MI[3)] | g/10 min | 45 | 43 | 42 | 46 | 45 | 48 | 42 | 32.7 | 31.5 | 30.3 |
| Second MI[4)] | | 120 | 110 | 105 | 125 | 121 | 128 | 119 | 113.4 | 105 | 107 |
| Third MI[5)] | | 160 | 130 | 120 | 167 | 159 | 170 | 157.2 | 153.3 | 160.2 | 162.5 |
| Biodegradability | % | 95 | 93 | 92 | 95 | 94 | 93 | 93 | 90 | 90 | 90 |
| Texture | - | 8.5 | 8.5 | 8.5 | 8.5 | 7.8 | 8.5 | 5.2 | 3 | 3.1 | 2.7 |
| 1) N.A.: Sample was broken and not measured.<br>2) N.A.: No rubbery flat region was derived in the temperature range.<br>3) First MI: Melt index at 190 °C | | | | | | | | | | | |

(continued)

| Classification | unit | Example 2-1 | Example 2-2 | Example 2-3 | Example 2-4 | Example 2-5 | Example 2-6 | Comparative Example 2-1 | Comparative Example 2-2 | Comparative Example 2-3 | Comparative Example 2-4 |
|---|---|---|---|---|---|---|---|---|---|---|---|
| 4) Second MI: Melt index at 230 °C<br>5) Third MI: Melt index at 250 °C | | | | | | | | | | | |

As shown in Table 5, it was confirmed that, as the biodegradable nonwoven fabrics of Examples 2-1 to 2-6 had an irreversible strain rate in a specific range or less, and a rubbery flat region in a temperature range of about 15 °C to 40 °C where nonwoven fabrics are generally used, compared to the biodegradable nonwoven fabrics of Comparative Examples 2-1 to 2-4, they has excellent elasticity and soft texture. Therefore, the biodegradable nonwoven fabrics of Examples 2-1 to 2-6 are environmentally friendly, and, when applied as sanitary materials that come into direct contact with the human body, can provide improved wearing comfort.

[industrial Applicability]

Embodiments can be applied to a biodegradable resin composition and a biodegradable molded article including the same.

## Claims

**1.** A biodegradable resin composition, comprising:

a first biodegradable resin comprising a first repeating unit derived from a diol, a second repeating unit derived from aromatic dicarboxylic acid, and a third repeating unit derived from aliphatic dicarboxylic acid; and
a crystallization accelerator,
wherein the crystallization accelerator is comprised in a content of 100 ppm to 50,000 ppm, and
an isothermal crystallization time at 90 °C according to Measurement Method 1 below is 10 seconds to 900 seconds:
[Measurement Method 1]

1) The biodegradable resin composition is heated up to 220 °C at a heating rate of 10 °C/min, and then maintained for 5 minutes.
2) Next, the biodegradable resin composition is cooled up to 90 °C at a cooling rate of 100 °C/min, and an isothermal state is maintained for 100 minutes.
3) Using differential scanning calorimetry, a time at which a total area of a crystallization peak of the biodegradable resin composition becomes half is measured.

**2.** The biodegradable resin composition according to claim 1, wherein the crystallization accelerator comprises at least one of an organic nucleating agent and an inorganic nucleating agent.

**3.** The biodegradable resin composition according to claim 2, wherein the biodegradable resin composition comprises the organic nucleating agent in a content of 10 ppm to 5,000 ppm.

**4.** The biodegradable resin composition according to claim 2, wherein the biodegradable resin composition comprises the inorganic nucleating agent in a content of 100 ppm to 10,000 ppm.

**5.** The biodegradable resin composition according to claim 1, wherein the biodegradable resin composition further comprises an external lubricant.

**6.** The biodegradable resin composition according to claim 5, wherein the biodegradable resin composition comprises the external lubricant in a content of 100 ppm to 5,000 ppm.

7. The biodegradable resin composition according to claim 1, wherein the biodegradable resin composition has a crystallization temperature (Tc) of 35 °C to 90 °C, as measured using differential scanning calorimetry.

8. The biodegradable resin composition according to claim 1, wherein the biodegradable resin composition has a melt flow rate of 2 g/10 min to 60 g/10 min, as measured under conditions of 190 °C and 2.16 kg.

9. The biodegradable resin composition according to claim 1, wherein the biodegradable resin composition has a tensile strength of 25 MPa or more according to Measurement Method 2 below:
[Measurement Method 2]

1) The biodegradable resin composition is manufactured into a specimen with a thickness of 300 μm.
2) For the specimen, tensile strength is measured at a rate of 100 mm/min using a universal testing machine.

10. A biodegradable nonwoven fabric, comprising:

a biodegradable resin composition that comprises a first biodegradable resin comprising a diol, aromatic dicarboxylic acid and aliphatic dicarboxylic acid,
wherein the biodegradable resin composition has a first irreversible strain rate of less than 30 % measured by Measurement Method 3 below:
[Measurement Method 3]

1) In a state in which the biodegradable resin composition is placed between a pair of flat stainless steel molds, it is compressed at 200 °C under a pressure of 20 Mpa to manufacture a biodegradable resin composition sheet having a thickness of 300 μm.
2) The biodegradable resin composition sheet is cut to manufacture a sample comprising a test part having a width of 3.18 mm and a length of 25 mm.
3) The test part is pulled at a speed of 10 mm/min in a longitudinal direction at room temperature. Here, the test part is pulled by 40 % more than a total length thereof.
4) The test part is recovered for 5 minutes at room temperature in a state where there is no external force.
5) The first irreversible strain rate is derived from Equation 1 below:

First irreversible strain rate = (Length of the test section after the recovery - 25 mm) / 25 mm. [Equation 1]

11. The biodegradable nonwoven fabric according to claim 10, wherein the biodegradable resin composition has a second irreversible strain rate of less than 20 % measured by Measurement Method 4 below:
[Measurement Method 4]

1) In a state in which the biodegradable resin composition is placed between a pair of flat stainless steel molds, it is compressed at 200 °C under a pressure of 20 Mpa to manufacture a biodegradable resin composition sheet having a thickness of 300 μm.
2) The biodegradable resin composition sheet is cut to manufacture a sample comprising a test part having a width of 3.18 mm and a length of 25 mm.
3) The test part is pulled at a speed of 10 mm/min in a longitudinal direction at room temperature. Here, the test part is pulled by 30 % more than a total length thereof.
4) The test part is recovered for 5 minutes at room temperature in a state where there is no external force.
5) The second irreversible strain rate is derived by Equation 2 below:

Second irreversible strain rate = (Length of the test section after the recovery - 25 mm) / 25 mm. [Equation 2]

12. The biodegradable nonwoven fabric according to claim 10, wherein the biodegradable resin composition has a third irreversible strain rate of less than 10 % measured by Measurement Method 5 below:
[Measurement Method 5]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample comprising a test part having a width of 3.18 mm and a length of 25 mm.
3) The test part is pulled at a speed of 10 mm/min in a longitudinal direction at room temperature. Here, it is pulled by 20 % more than a total length of the test part.
4) The test part is recovered for 5 minutes at room temperature in a state where there is no external force.
5) The third irreversible strain rate is derived by Equation 3 below:

Third irreversible strain rate = (Length of the test section after the recovery - 25 mm) / 25 mm. [Equation 3]

**13.** The biodegradable nonwoven fabric according to claim 10, wherein the biodegradable resin composition has a fourth irreversible strain rate of less than 5 % measured by Measurement Method 6 below:
[Measurement Method 6]

1) In a state in which the biodegradable resin composition is placed between a pair of flat stainless steel molds, it is compressed at 200 °C under a pressure of 20 Mpa to manufacture a biodegradable resin composition sheet having a thickness of 300 $\mu$m.
2) The biodegradable resin composition sheet is cut to manufacture a sample comprising a test part having a width of 3.18 mm and a length of 25 mm.
3) The test part is pulled at a speed of 10 mm/min in a longitudinal direction at room temperature. Here, it is pulled by 10 % more than a total length of the test part.
4) The test part is recovered for 5 minutes at room temperature in a state where there is no external force.
5) The fourth irreversible strain rate is derived by Equation 4 below:

Fourth irreversible strain rate = (Length of the test section after the recovery - 25 mm) / 25 mm. [Equation 4]

**14.** The biodegradable nonwoven fabric according to claim 10, wherein the biodegradable resin composition further comprises a second biodegradable resin,
wherein the second biodegradable resin comprises one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate.

**15.** A biodegradable resin composition, comprising:

a first biodegradable resin comprising a diol, aromatic dicarboxylic acid and aliphatic dicarboxylic acid,
wherein a temperature of maximum loss tangent by dynamic mechanical analysis is - 40 °C to 0 °C, and a minimum temperature in a rubbery flat region is lower than 30 °C,
wherein the rubbery flat region is higher than the temperature of the maximum loss tangent, and a loss tangent change rate is in a temperature of less than 0.025/10 °C.

【FIG. 1】

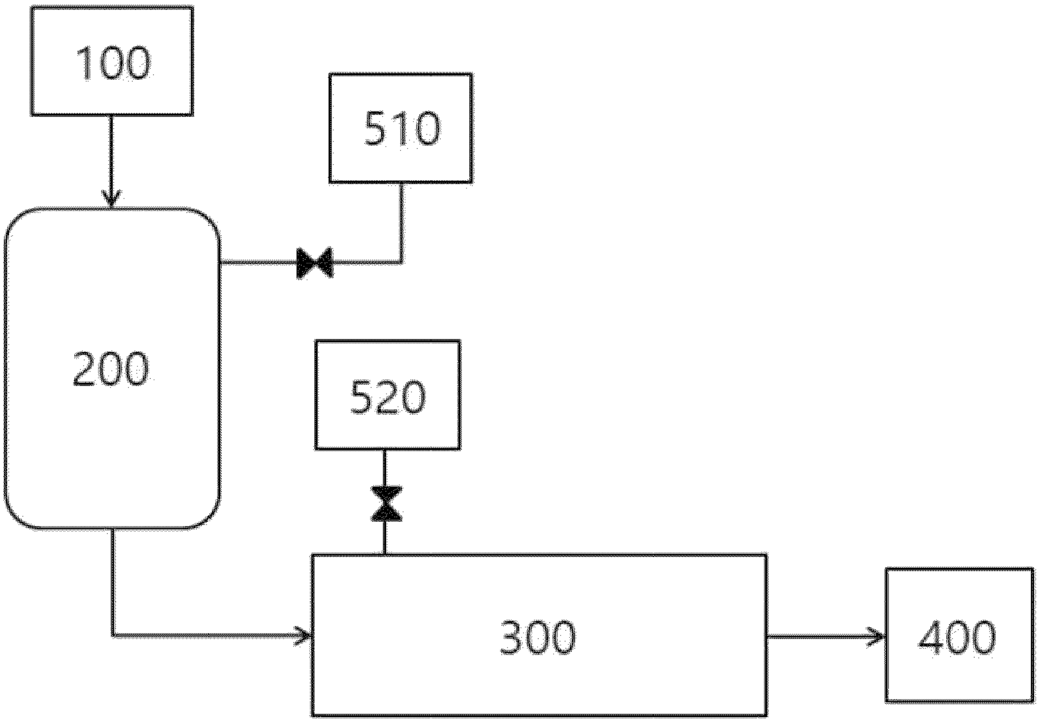


【FIG. 2】

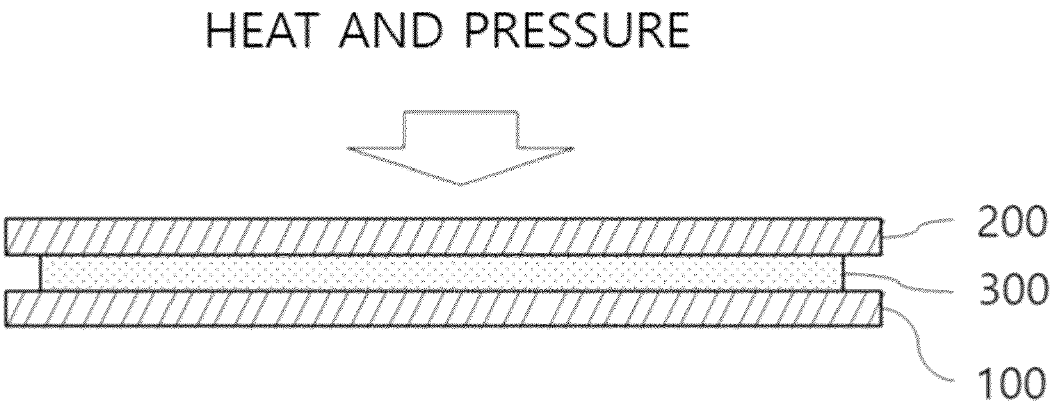

【FIG. 3】

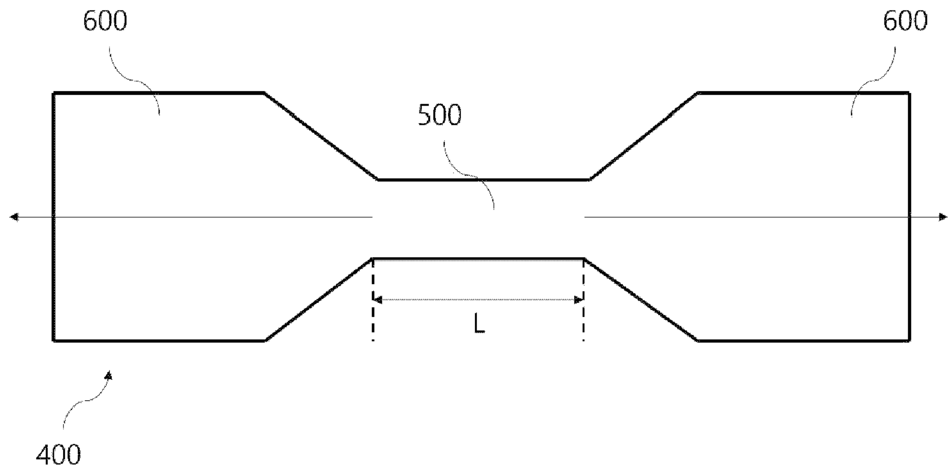

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4797468 A
- US 5470944 A
- US 5770682 A
- US 5821327 A
- US 5880254 A
- US 6326458 B